Europäisches Patentamt

European Patent Office

Office européen des brevets

(11) Publication number: **0 319 887 B1**

## EUROPEAN PATENT SPECIFICATION

(45) Date of publication of patent specification: **31.03.93**

(51) Int. Cl.5: **G01N 21/17**, G01N 35/00, G01N 1/10, G01N 21/35

(21) Application number: **88120269.1**

(22) Date of filing: **05.12.88**

(54) Method and apparatus for analyzing fluids by multi-fluid modulation modes.

(30) Priority: **11.12.87 JP 314806/87**
**12.12.87 JP 315047/87**
**24.12.87 JP 328734/87**
**26.12.87 JP 335864/87**
**28.12.87 JP 335120/87**
**29.12.87 JP 335786/87**
**29.12.87 JP 335787/87**
**30.12.87 JP 201169/87 U**

(43) Date of publication of application:
**14.06.89 Bulletin 89/24**

(45) Publication of the grant of the patent:
**31.03.93 Bulletin 93/13**

(84) Designated Contracting States:
**AT DE FR IT NL**

(56) References cited:
**EP-A- 0 076 571**
**WO-A-87/01204**
**US-A- 3 949 599**
**US-A- 4 393 304**

(73) Proprietor: **HORIBA, LTD.**
**2 Miyanohigashi-machi Kissyoin**
**Minami-ku Kyoto(JP)**

(72) Inventor: **Mikasa, Hajime**
**1158-3, Katsube-cho**
**Moriyama-city Siga-prefecture(JP)**
Inventor: **Asano, Ichiro**
**330-470, Bodaiji Kousei-cho**
**Kouka-gun Siga-prefecture(JP)**
Inventor: **Kihara, Nobutaka**
**4-24, 1-chome, Chiyogaoka**
**Nara(JP)**
Inventor: **Ishimoto, Shuichi**
**43-5, Higashi kamaeguchi-cho Umezu**
**Ukyo-ku Kyoto(JP)**
Inventor: **Fujita, Isao**
**1-1 Nakajima Simotubayashi**
**Nishikyo-ku Kyoto(JP)**
Inventor: **Kada, Norio**
**11-18, Suehiro-cho**
**Ibaraki-city Osaka(JP)**
Inventor: **Aoki, Takeshi**
**276, Takoyakushi-cho Muromachi Nijo**
**sagaru**
**Nakagyo-ku Kyoto(JP)**

Inventor: **Imaki, Takao**
**9-4, 1-chome Baba**
**Nagaokakyo-city Kyoto(JP)**
Inventor: **Fujiwara, Masahiko**
**25-404, Nishi 9, 2-Chome katayama-cho**
**Suita-city Osaka(JP)**
Inventor: **Shimizu, Naohito**
**12, Gokouda-cho Nishikujyo**
**Minami-ku Kyoto(JP)**
Inventor: **Kato, Junji**
**67, Chiyohara-cho Katura**
**Nishikyo-ku Kyoto(JP)**

(74) Representative: **TER MEER - MÜLLER - STEIN-**
**MEISTER & PARTNER**
**Mauerkircherstrasse 45**
**W-8000 München 80 (DE)**

## Description

The present invention relates to a method an an apparatus for simultaneously and continuously analyzing a plurality of sample fluids.

US-A-3,949,599 describes such a method, this method comprising the following steps:

- subjecting a plurality of sample fluids to fluid flow modulation with reference fluids respectively, by passing said sample fluids and respectiv said reference fluids alternately through a fluid flow modulation means;
- simultaneously and continuously supplying an analytical portion provided with only one sample detector with said respective sample fluids which have been subjected to said fluid flow modulation; and
- evaluating the output signal from said detector for obtaining analytical values of said respective sample fluids.

The related apparatus comprises means for performing the said steps.

In the method as described in US-A-3,949,599, two samples are modulated with a period T and with a phase shift of T/2. In certain instances, the contribution of the measuring signal related to the first sample to the measuring signal related to the second sample, and vice versa, is zero. Therefore, an analytical portion provided with only one sample detector can be used to analyze too fluids.

It is the object of the present invention to provide a method and an apparatus with which it is possible to analyze simultaneously not only two sample fluids, but even more than two sample fluids with a single detector.

The method of the present invention comprises the above listed steps and is characterized in that:

- each sample fluid is modulated by a respective frequency different from the frequencies with which the other sample fluids are modulated; and
- the output signal from said detector is divided into signal ingredients having said different modulation frequencies, and rectification and levelling treatment of said signal ingredients is carried out, thereby obtaining said analytical values.

The apparatus of the present invention comprises means for performing the steps of the method of the present invention.

As the method of the present invention modulates each sample fluid flow with a different modulation frequency, the measuring results for the different fluids can be distinguished by the different frequencies of the respective measuring signals. Therefore, it is easily possible to analyze even more than two sample fluids with only a single detector.

Further details of the invention and advantageous features thereof will be described in the following with reference to the accompanying drawings. In the drawings:

Fig. 1 is a diagram showing the basic concept of the method of the present invention for analyzing a fluid by a multi-fluid flow modulation mode, and an outlined apparatus for carrying out this method, said apparatus outputting analytical values far n sample fluids,

Fig. 2 is a block diagram showing principle parts in the apparatus B in Fig. 1,

Fig. 3 is a general rough block diagram showing the apparatus according to a first preferred basic embodiment of the invention, this apparatus outputting analytical values for two different fluids,

Fig. 4 is a block circuit diagram showing signal treating means which is a principle part of the apparatus of Fig. 3,

Fig. 5(A), (B) is a diagram showing a modulation means which is another principle part of the apparatus of Fig. 3,

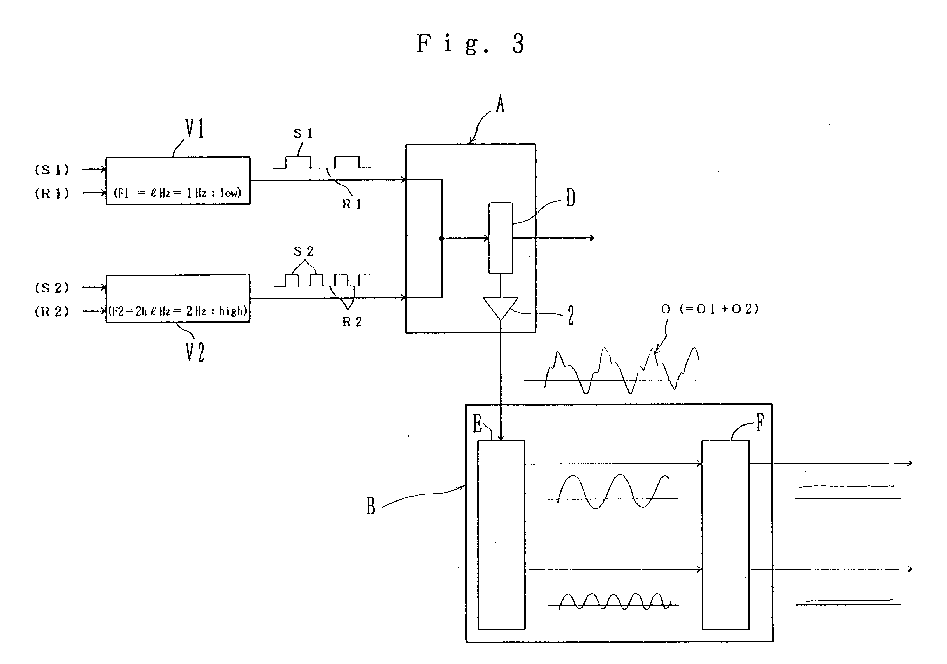

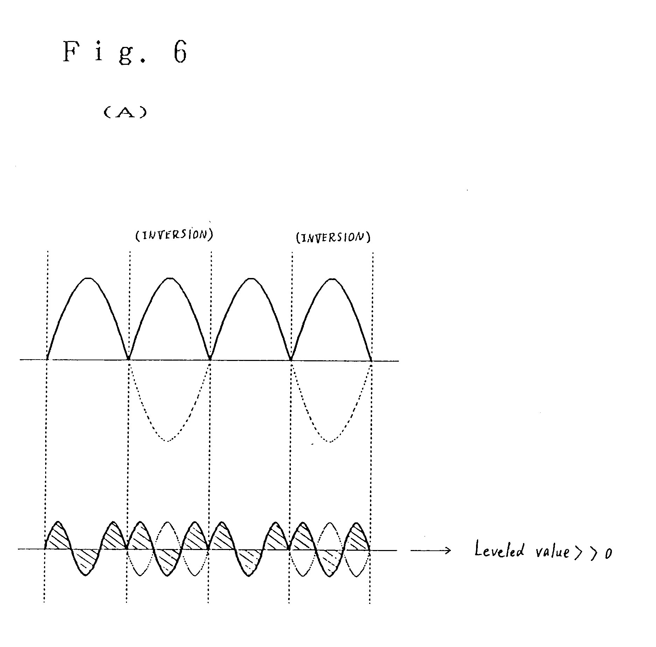

Fig. 6(A), (B), Fig. 7(A), (B), (C), (D), and Fig. 8 (A), (B) are diagrams showing a detailed operation of the signal treatment means and modulation means, respectively, whereby, in the A- and C-Figures, the upper signal is the synchronous detecting-rectifying signal for the original signal in the signal O of Fig. 3 on the side of a lower fluid modulation frequency, and the lower signal is the synchronous detecting-rectifying signal for the interferential noise ingredient from the side of a higher fluid modulation frequency in the signal O on the side of the lower fluid modulation, and whereby in the B- and D-Figures these signals are illustrated for the higher fluid modulation frequency and the side of the higher fluid modulation frequency, respectively,

Fig. 9(A), (B) is a more detailed block diagram showing said modulation means,

Fig. 10(A), (B) is a diagram showing the operation performed by said modulation means, whereby the signals are the same ones as e. g. in Fig. 6(A) and (B), respectively,

Fig. 11 is a rough block diagram showing principle parts of an apparatus according to a second preferred basic embodiment of the invention,

Fig. 12 is a rough block diagram showing principle parts of an apparatus according to a third preferred basic embodiment of the invention,

Fig. 13 is a rough block diagram showing principle parts of the modifications of the apparatus according to the above described first to third preferred basic embodiments,

Fig. 14 is a general rough block diagram showing an apparatus according to a first applied preferred embodiment of the invention, said apparatus outputting analytical values related to total HC, non-methane and methane,

Fig. 15 is a block diagram showing a signal treatment apparatus which is a principle part of the apparatus of Fig. 14,

Fig. 16 is a general rough block diagram showing an apparatus to a second applied preferred embodiment of the invention, said apparatus outputting the same analytical values as the apparatus of Fig. 14,

Fig. 17 is a block circuit diagram showing a signal treatment means which is a principle part of the apparatus of Fig. 16,

Fig. 18 is a general rough block diagram showing an apparatus according to a third applied preferred embodiment of the invention, said apparatus outputting the same analytical values as the apparatus of Fig. 14,

Fig. 19 is a block circuit diagram showing a signal treatment means which is a principle part of the apparatus of Fig. 18,

Fig. 20(A), (B), (C) is a diagram showing the change in concentration of the sample fluid introduced into one measuring system (A), the final output signal from one measuring system (B), and, respectively, the final output signal from the other measuring system (C),

Fig. 21(A), (B), (C), (D) is a diagram illustrating a detailed operation of the above described first to third applied preferred embodiments, showing the change in concentration of the sample fluid introduced into one measuring system (A), the change in concentration of the sample fluid, which has passed through a buffer tank in said one measuring system (B), the final output signal from one measuring system (C), and, respectively, the final output signal from the other measuring system (D),

Fig. 22 is a general rough block diagram showing an apparatus according to a fourth applied preferred embodiment of the invention,

Fig. 23 is a rough block diagram showing principal parts of an apparatus according to a modification of the fourth applied preferred embodiment,

Fig. 24 is a general rough block diagram showing an apparatus according to a fifth applied preferred embodiment of the invention,

Fig. 25 is a general rough block diagram showing an apparatus according to a sixth applied preferred embodiment of the invention,

Fig. 26 is a general rough block diagram showing an apparatus according to a seventh applied preferred embodiment of the invention, and

Fig. 27 is a diagram showing concentration output characteristics of a general absorption analyzer used for describing an operation of the apparatus according to the seventh applied preferred embodiment of the invention.

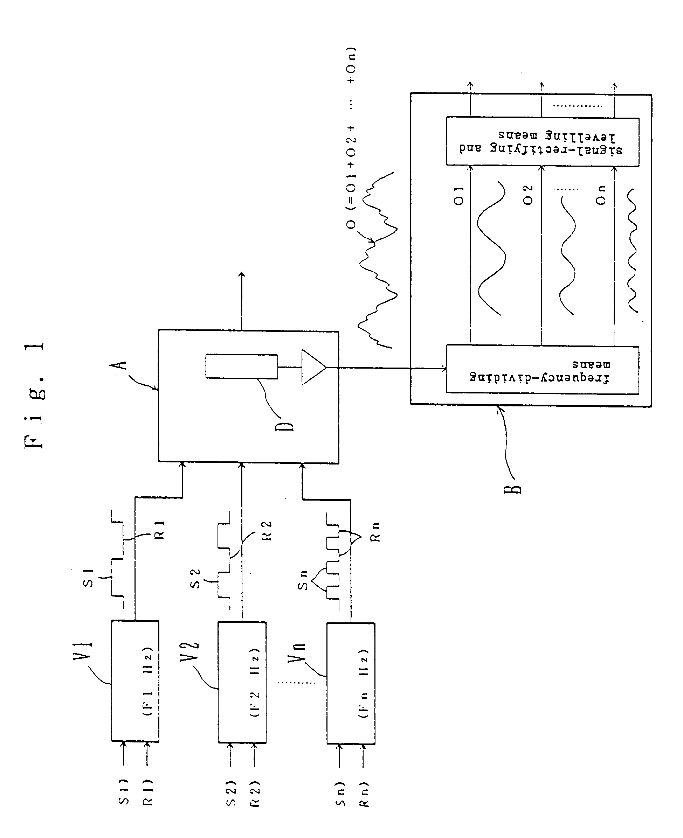

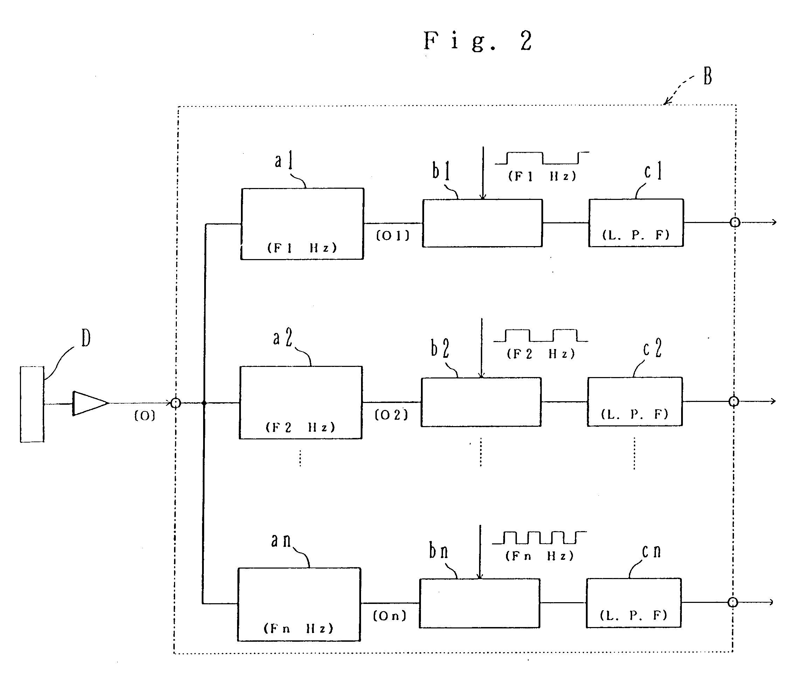

Fig. 1 is showing a basic conception and Fig. 2 is illustrating a concrete construction of the principal parts of an apparatus for analyzing a fluid by a multi-fluid flow modulation mode according to the present invention.

This apparatus comprises fluid flow modulation means V1, V2, ..., Vn for subjecting a plurality of sample fluids S1, S2, ..., Sn which may be originally different or a single sample fluid may be divided into a plurality of systems to a fluid flow modulation by reference fluids R1, R2, ..., Rn, respectively, at frequencies F1, F2, ..., Fn (Hz) different to each other, an analytical portion A provided with only one detector D, to which said respective sample fluids S1, S2, ..., Sn subjected to said fluid modulation are simultaneously and continuously supplied, and signal treatment means B for dividing an output signal O from said detector D in said analytical portion A into signal ingredients O1, O2, ..., On having respective modulation frequencies F1, F2, ..., Fn for said respective sample fluids S1, S2, ..., Sn by means of a suitable frequency-dividing means and a suitable signal-rectifying and levelling means (shown conceptually in Fig. 1) to carry out the rectification and the levelling treatment, thereby obtaining analytical values about said respective sample fluids S1, S2, ..., Sn.

Said signal treatment means B is comprising:

- a plurality of band pass filters a1, a2, ..., an disposed in parallel to each other for passing only signals within bands in the vicinity of said respective modulation frequencies F1, F2, ..., Fn of the output signal O from said detector D,

- synchronous detector-rectifiers b1, b2, ..., bn disposed downstream of said respective band pass filters a1, a2, ..., an for detecting and rectifying an output signal from said band pass filters a1, a2, ..., an synchronous with the modulation of the fluid flow modulation means V1, V2, ..., Vn corresponding to the frequency F1, F2, ..., Fn of the band pass filters a1, a2, ... an, and

- a leveller element c1, c2, ..., cn disposed downstream of said respective synchronous detector-rectifiers b1, b2, ..., bn for levelling an output signal from said respective synchronous detector-rectifiers b1, b2, ...n, bn,

as concretely shown in Fig. 2.

The operation of said apparatus is as follows: In the method for analyzing a fluid by a multi-fluid flow modulation mode according to the present invention, as still more obvious also from the description of the preferred embodiments which will be mentioned later, a peculiar method is provided in which a plurality of sample fluids S1, S2, ..., Sn are subjected to the fluid flow modulation by the reference fluids R1, R2, ..., Rn at the frequencies F1, F2, ..., Fn different to each other by the use of a suitable fluid flow modulation means V1, V2, ..., Vn composed of, for example, a rotary valve, three-way change-over electromagnetic valve or four-way change-over electromagnetic valve are simultaneously and continuously supplied to an analytical portion A. This portion A is provided with only one sensor D to obtain one measured signal O (= O1 + O2 + ... + On) comprising individual measured signal components (O1, O2, ..., On) corresponding to all sample fluids S1, S2, ..., Sn from only one sensor D in a lump. The signal treatment in which the output signal O from said only one sensor D is divided into the signal components O1, O2, ..., On of the respective modulation frequencies F1, F2, ..., Fn for said respective sample fluids S1, S2, ..., Sn to rectify and level, is carried out by the use of suitable signal treatment means B. The signal treatment means B comprises a frequency-dividing circuit and a signal-rectifying and levelling circuit in combination, as shown in Fig. 1, serves to obtain the analyzed values of said respetive sample fluids S1, S2, ..., Sn. Therefore, the use of the simple and inexpensive analyzer provided with only one sensor is sufficient even in the simultaneous and continuous analysis of a plurality of ingredients in the same one sample fluid or in the simultaneous and continuous analysis of a definite ingredient contained in a plurality of different sample fluids. Accordingly, the measurement system can be easily small-sized and simplified and the costs can be reduced easily in comparison with the conventional general method of analyzing a fluid. Furthermore an error in zero-calibration between each of the plurality of sensors and a difference in sensitivity between each of the plurality of sensors are not produced which is in contrast to the conventional methods. Further, the regulation of the sensor can be carried out easily in a short time, so that an excellent accuracy of measurement can be secured always.

Moreover, various kinds of software or hardware such as a computer capable of operating Fourier analysis (corresponding to a frequency-dividing treatment) and digital analysis such as an absolute value-averaging treatment (corresponding to a rectifying and levelling treatment) or an electric circuit such as a lock-in amplifier, can be used as said signal treatment means B. In the apparatus according to the present invention in particular a plurality of signal treatment systems comprising the band pass filters a1, a2, ..., an, the synchronous detector-rectifiers b1, b2, ..., bn and the leveller elements (for example low pass filters or capacitors) c1, c2, ..., cn connected to each other in series are disposed in parallel. Therefore, the apparatus can be remarkably simplified and is inexpensive in comparison with apparatuses using the above described computer or lock-in amplifier. In addition, a further advantage occurs in that the apparatus is adapted to carry out the dividing action, for which the use of merely the band pass filters a1, a2, ..., an may be insufficient. But by the use of the synchronous detector-rectifiers b1, b2, ..., bn to carry out the division the apparatus has a still higher accuracy. Therefore, the signal treatment efficiency (S/N ratio) is remarkably superior to that of the apparatus wherein the frequency is merely divided by the band pass filter and then immediately thereafter merely the absolute value rectification is carried out.

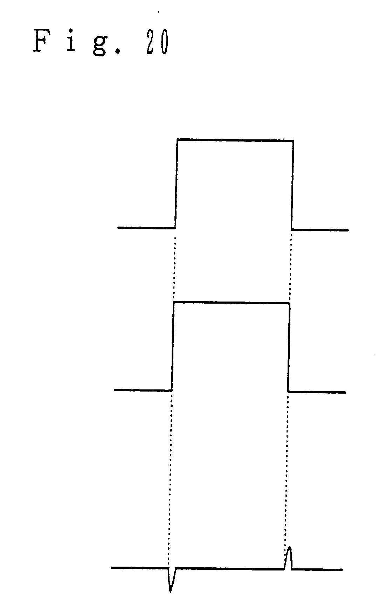

The preferred embodiments of a method and an apparatus for analyzing fluids by a multi-fluid flow modulation mode according to the present invention are described below with reference to the Figs. 1 to 27.

Fig. 3 relates to a first preferred basic embodiment and shows a rough construction of a system for analyzing fluids by a multi-fluid flow modulation mode according to the present invention. This system is applied to the case where the concentration of $NO_x$, $H_yC_z$ or the like contained in sample fluids such as an exhaust fluid from plants and the atmosphere are determined.

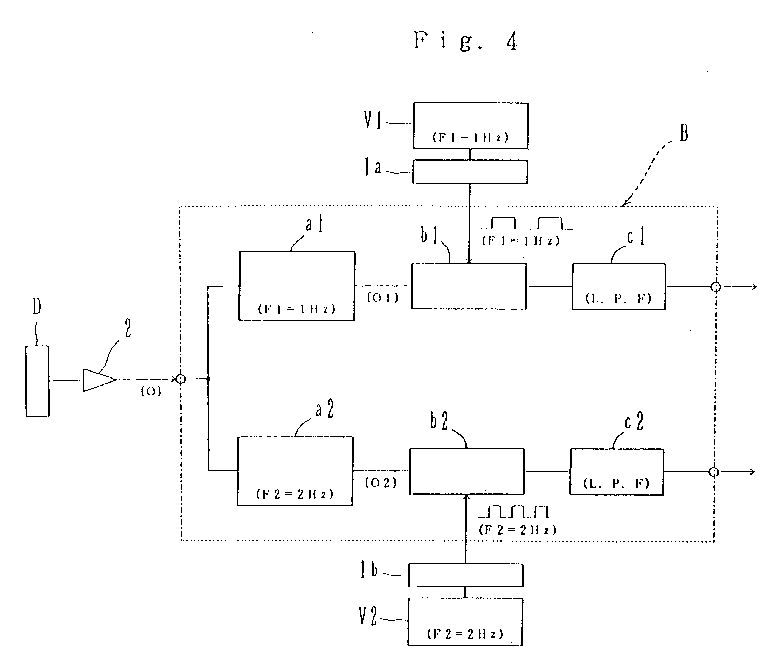

Now, as shown in Figs. 3 and 4, a plurality (in this case, two) of sample fluids S1, S2 which may be originally different or a single sample fluid divided into a plurality of systems, as mentioned later, are subjected to the fluid flow modulation by the reference fluids R1, R2 (in general a zero gas is used) at frequencies F1, F2 (Hz) different to each other by the use of fluid flow modulation means V1, V2, respectively. In short, the sample fluids S1, S2 and the reference fluids R1, R2 are alternately passed through said fluid flow modulation means V1, V2. Then, the respective sample fluids S1, S2, which have been subjected to the fluid flow modulation by the reference fluids R1, R2, are simultaneously and continuously supplied to the analytical portion A provided with only one sensor D.

In addition, said both fluid flow modulation means V1, V2 are set so that the ratio of the fluid flow modulation frequencies F1, F2 may be even numbers or reciprocals thereof. In short, they are set so that the other frequency (F2 or F1) may be $2h\ell$ Hz (h is an integer) when one frequency (F1 or F2) is $\ell$ Hz. In the preferred embodiment F1 = 1Hz for the sample fluid S1 of a high concentration and F2 = 2Hz for the sample fluid S2 of a low concentration ($\ell$ = 1, h = 1). In addition, in this case, in general a chemical luminescence detector (CLD) for the detection of $NO_x$, a flame ion detector (FID) for the detection of hydrocarbons ($H_yC_z$) and the like, are used as the sensor D in said analytical portion A. In short, detectors of the type, through which the sample fluid directly passes, so that both sample fluids S1, S2, which have been subjected to said fluid modulation, are supplied to said sensor D under a mixed condition.

Accordingly, the output signal O supplied from said sensor D through the preamplifier 2, as schematically shown in the drawings, is obtained in the form of one measured signal O = O1 + O2 comprising the individual measured signal components O1 and O2 in a lump. These components O1, O2 correspond to both sample fluids S1, S2.

Then, the output signal O from said sensor D is subjected to a signal treatment, in which it is divided into the signal components O1, O2 of the respective modulation frequencies F1 (1Hz), F2 (2Hz) for said respective sample fluids S1, S2 to be rectified and levelled by a suitable signal treatment means B. This signal treatment means B could be an electric circuit comprising a frequency dividing circuit E and a signal rectifying and levelling circuit F in combination, as conceptionally shown in Fig. 3. With this treatment analyzed values about said respective sample fluids S1, S2 are obtained.

The concrete circuit construction of said signal treatment B is shown in Fig. 4.

The output signal O supplied from the detector D through said preamplifier 2 is branched into a plurality of signal treatment systems (in this example into two systems) disposed in parallel to each other. A band pass filter a1 for selectively extracting merely the signal O1 having the modulation frequency F1 (1Hz) for the sample fluid S1 is arranged in one signal treatment system. A synchronous detector rectifier b1 for synchronously rectifying the output signal O1 from said band pass filter a1 is wired downstream of the band pass filter a1 so as to cary out the dividing of the frequency, for which there is the possibility that the use of merely said band pass filter a1 is insufficient. By the use of the synchronous signal expressing the actual fluid flow modulating action by the fluid flow modulation means V1 with F1 = 1Hz from a synchronous signal generator 1a mounted on the fluid flow modulation means V1 for the sample fluid S1, a division having a still higher accuracy can be carried out. This synchronous detector rectifier b1 simultaneously converts the divided alternating current into a direct current. A low pass filter (L.P.F.) as a leveller element c1 for levelling the output signal from said synchronous detector rectifier b1 and for removing high-frequency noises is arranged downstream of the synchronous detector rectifier b1.

A band pass filter a2 for (dividedly taking out) merely the signal O2 having the modulation frequency F2 (2Hz) for the sample fluid S2 is disposed in another one signal treatment system. A synchronous detector rectifier b2 for synchronously rectifying the output signal O2 from said band pass filter a2 is connected downstream of the band pass filter a2 so as to carry out the dividing of the frequency, for which there is the possibility that the use of merely said band pass filter a2 is insufficient. By the use of the synchronous signal expressing the actual fluid flow modulating action by the fluid flow modulation means V2 with F2 = 2Hz from a synchronous signal generator 1b mounted on the fluid flow modulation means V2 for the sample fluid S2 division having a still higher accuracy can be carried out. This synchronous detector rectifier b2 simultaneously converts the divided alternating current into a direct current. A low pass filter (L.P.F.) as the leveller element c2 for levelling the output signal from said synchronous detector rectifier b2 and for removing high-frequency noises is disposed downstream of the synchronous detector rectifier b2. This signal treatment means B is not limited to the hardware, such as the above described electric circuits. A software, such as the computer system capable of operating Fourier analysis (corresponding to the frequency-dividing treatment) and the digital analysis, such as the absolute value-averaging treatment (corresponding to the rectifying and levelling treatment), may be used also.

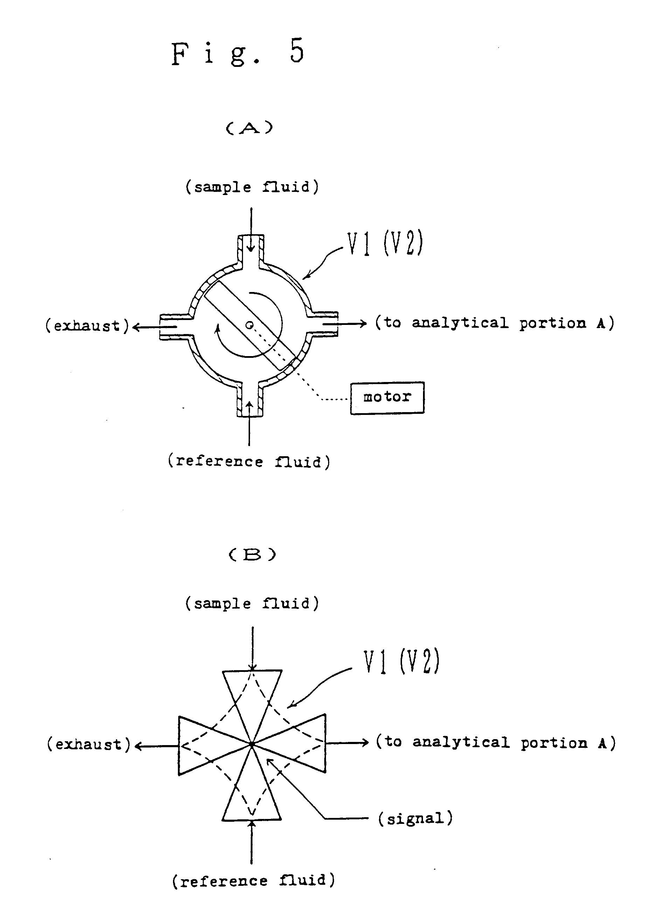

In addition, every means capable of alternately changing-over the sample fluid S1 (S2) and the reference fluid R1 (R2) at the appointed frequency of an optional construction can be used as said respective fluid flow modulation means V1, V2. For example, a rotary valve as shown in Fig. 5(A) may be used. Or, a four-way changing-over electromagnetic valve as shown in Fig. 5(B) may be used. Furthermore, a three-way changing-over electromagnetic valve (not shown) may be considered as advantageous.

Although an example in which the fluid modulation frequencies F1, F2 by said both fluid flow modulation means V1, V2 are set at 1Hz and 2Hz, respectively, is shown in the above described preferred embodiment, the reason of this setting is described below.

As described with reference to Fig. 4, in said signal treatment means B the measured signal O supplied from the sensor D is first divided into the individual measured signal ingredients O1 (having a frequency of F1) and O2 (having a frequency of F2) corresponding to both sample fluids S1, S2. This division is carried out by means of the band pass filters a1, a2. But so far as any practically very difficult measure is not taken, for example said both fluid flow modulation frequencies F1, F2 are not enough greatly and differently set or high-grade band pass filters having considerably sharp frequency-cutting characteristics are not used as said both band pass filters a1, a2, the reliable division of frequency cannot be achieved. Therefore the mutual interference in which a noise ingredient due to the other fluid flow modulation frequency F2 (F1) is mixed with a signal which is passed through each band pass filter a1 (a2) in addition to the signal O1 (O2) having the original frequency F1 (F2), cannot be avoided.

If the noise ingredient raving the other fluid flow modulation frequency F2 (F1) due to the mutual interference is mixed with the signal which is passed through each band pass filter a1 (a2) in the above described manner the following disadvantages occur.

Both fluid flow modulation frequencies F1, F2 can be optionally set as a rule but in this case, as a rule, even after the signal was subjected to the synchronous detection-rectification by the synchronous detector-rectifier b1 (b2) the signal correspond to said interferential noise ingredient remains as a factor of errors of measurement. In short, the levelled value of the signal does not amount to 0.

This will be easily understood from Figs. 6(A), (B) illustrating a case where for example one fluid flow modulation frequency F1 is set at 1Hz and the other fluid flow modulation frequency F2 is set at 3Hz.

In addition, it has been experimentally found out that there is a tendency that the factor of errors of measurement due to the above described mutual interference very greatly appears in a system with a lower-frequency signal as the measured signal, as obvious in particular from Fig. 6(A). But it does not appear so greatly in a system with a higher-frequency signal as the measured signal, as obvious from Fig. 6(B). In short, the interference is increased from a side of the system with the higher-frequency signal as the measured signal toward a side of the lower-frequency signal as the measured signal.

In addition, the above described problem is not limited by the case where the noise ingredient due to the mutual interference remains but occurs also in the case where a noise ingredient having the frequency F2 (F1) of the other system due to the other factor, such as a difference between said fluid flow modulation means V1 (V2) in mechanical duty, is mixed.

Accordingly, the following means are adopted to reliably reduce the errors of measurement due to the interferential noise ingredient and the like having the other frequency signal in the system with the above described one frequency signal as the measured signal.

The first measure is that any one (S2) of both sample fluids S1, S2 has a lower concentration or a smaller change in concentration. For example, a single concentration of methane which is one object to be measured, is clearly smaller than a total concentration of HC (THC) which is the other object to be measured. Further, in the case where a concentration of a non-methane (NMHC) in an air is measured by the differential method, the sample fluid (S2) having the lower concentration (or the smaller change in concentration) is supplied to the fluid flow modulation means (V2) in the system of the higher modulation frequency. This is leading into disadvantageous characteristics in so far that an interferential influence upon the other measuring system is large. In contrast, when the other sample fluid (S1) having the higher concentration (or the higher change in concentration) is supplied to the fluid flow modulation means (V1) in the system of the lower modulation frequency this leads into advantageous characteristics so that an interferential influence upon the other measuring system is not so large. Thus, the errors of measurement due to the interferential noise ingredient of the other frequency signal in the system with one frequency signal as the measured signal can be remarkably reduced without requiring any practically difficult modification. For example, both fluid flow modulation frequencies are set at sufficient large and different values or high-grade band pass filters having sharp frequency-cutting characteristics are used as both band pass filters a1, a2 in the signal treatment means B.

In addition, in this case it is desirable that the flow rate of the sample fluid S2 having the lower concentration is adapted to be larger than that of the sample fluid S1 having the higher concentration. Thus, the so-called tailing phenomenon due to the desorption of said sample fluid S1 onto the sensor D and the like can be reduced in the measurement of the sample fluid S2 succeeding to the measurement of the sample fluid S1.

The second measure is that in particular both fluid flow modulation means V1, V2 are set so that the ratios of the fluid flow modulation frequencies F1, F2 are even numbers or reciprocals thereof (for example, F1 may be $\ell$ Hz and F2 may be $2h\ell$ Hz or vice versa, wherein h is an integer). Therefore, the above described errors of measurement due to the noise ingredient of the other frequency signal in the system with one frequency signal as the measured signal can be reliably and easily reduced without using any practically difficult measures. For example, by setting both fluid flow modulation frequencies F1, F2 at enough great and different values or using high-grade band pass filters having sharp frequency-cutting characteristics as said both band pass filters a1, a2 in the signal treatment means B.

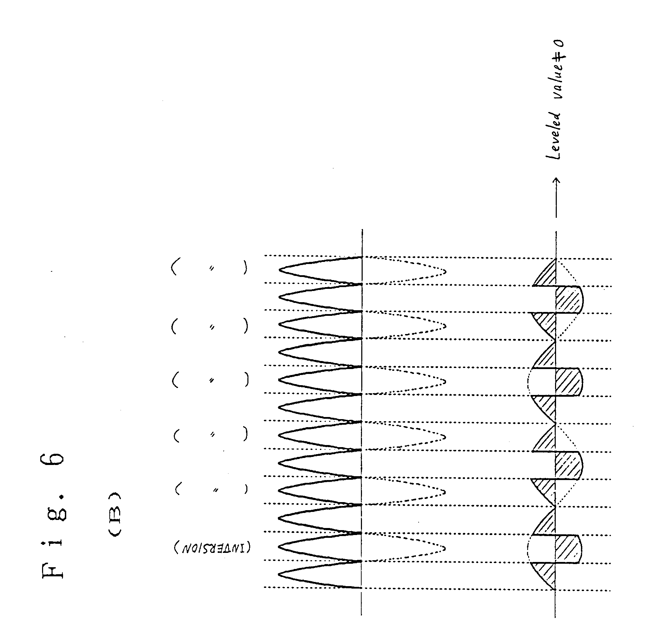

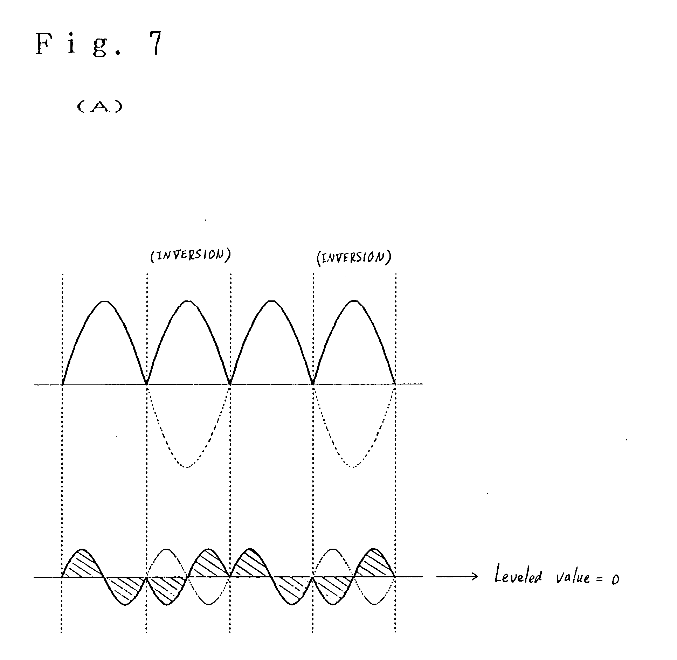

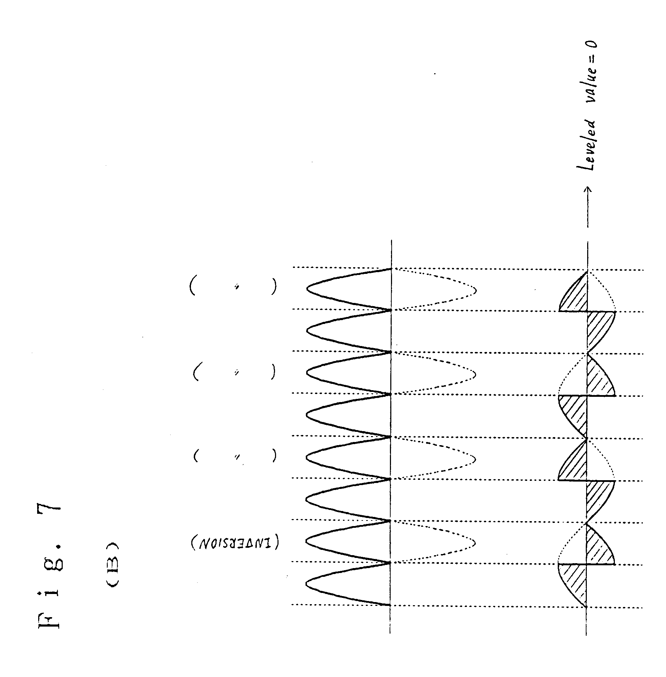

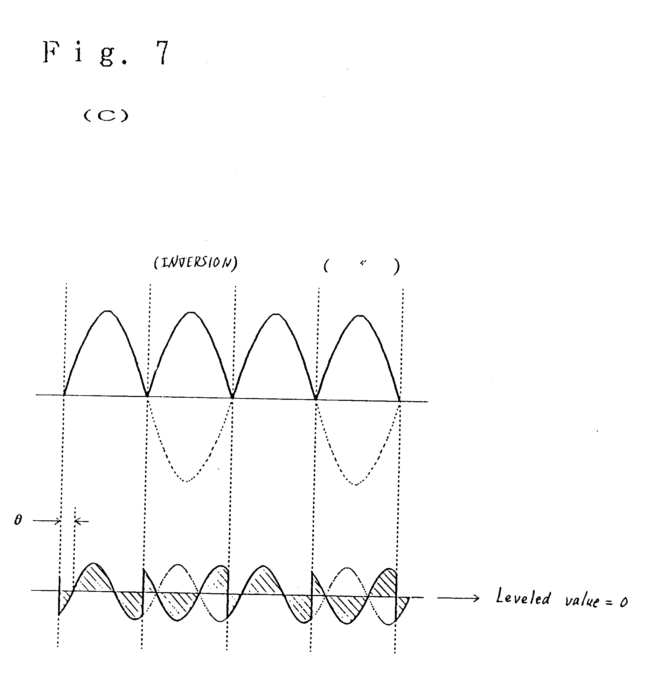

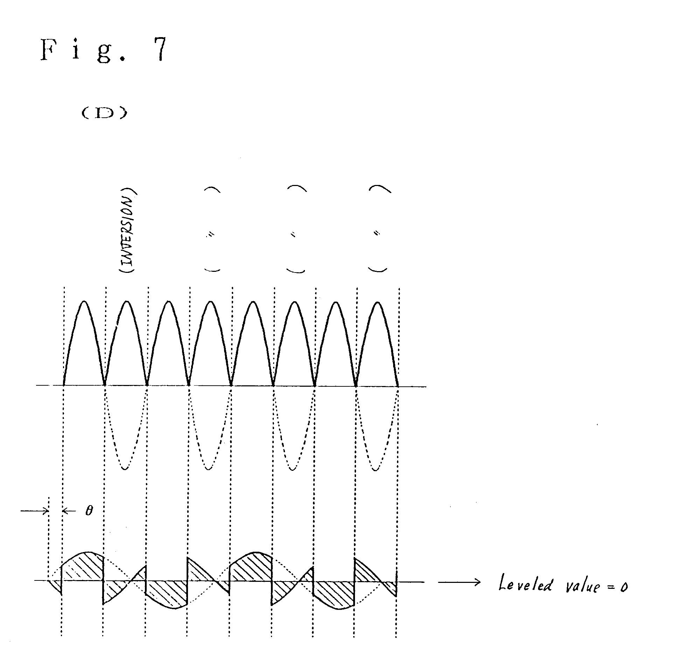

In short, in the case where for example, one (lower) fluid flow modulation frequency F1 is 1Hz and the other (higher) fluid flow modulation frequency F2 is 2Hz, which is even number times (2 times) over that former, even though the interferential noise ingredient having the higher fluid flow modulation frequency (2Hz) is mixed in the signal, which is passed through the band pass filter a1 in the system with the lower frequency signal (1Hz) in addition to the original signal O1 (1Hz), as shown in Fig. 7(A), and if the signal is subjected to the synchronous detection-rectification by the synchronous detector-rectifier b1, said noise ingredient (2Hz) is subjected to the synchronous detection-rectification so that the levelled value may be subjected to the plus/minus compensation to be turned to 0 by the subsequent leveller element c1. Therefore, the correct measured signal corresponding merely to the original signal O1 (1Hz) can be obtained from the leveller element c1. In addition, also in the system with the higher frequency signal (2Hz) as the measured signal contrary to the above described case the levelled value of the interferential noise ingredient of the lower frequency signal (1Hz) is similarly subjected to the plus/minus compensation to be turned to 0, whereby the correct measured signal showing no error of measurement can be obtained, as easily understood from Fig. 7-(B).

The above described Fig. 7(A), (B) show the case where the original signal and the interferential noise ingredient have frequencies different to each other with the same one phase. But also in the case where they are different in phase by $\theta$, the levelled value of the interferential noise ingredient is subjected to the plus/minus compensation to amount to 0 likewise, as shown in Fig. 7(C), (D).

However, although the object of "reducing errors of measurement due to the interferential noise ingredient having the other frequency (F2) in the system with one frequency signal F1 as the measured signal" can be achieved by the first and second measures, the following problems still remain.

As above described, whatever construction said fluid flow modulation means V1, V2 may have, it is inevitable that the actual modulation frequencies F1, F2 of the sample fluids S1, S2 subjected to the fluid flow modulation by the respective fluid flow modulation means V1, V2 contain the noise ingredients.These noise ingredients are having frequencies other than the original fluid flow modulation frequencies F1, F2 due to the difference in mechanical duty resulting from errors in the manufacture, uneven driving of driving mechanism and the like, the difference in passage until the detecting portion A and the like. The noise ingredients having the frequency F2 of the other system and other high frequencies are contained in the fluid flow modulation frequency of the sample fluid S1 from one fluid flow modulation means V1 in addition to the original fluid flow modulation frequency F1, while the noise ingredients having the frequency F1 of the other system and other high frequencies are contained in the fluid flow modulation frequency of the sample fluid S2 from the other fluid flow modulation means V2 in addition to the original fluid flow modulation frequency F2.

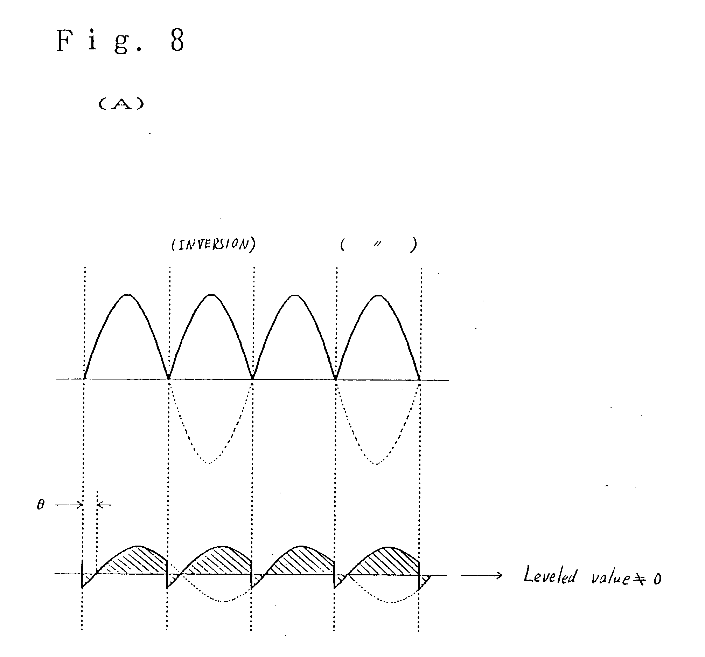

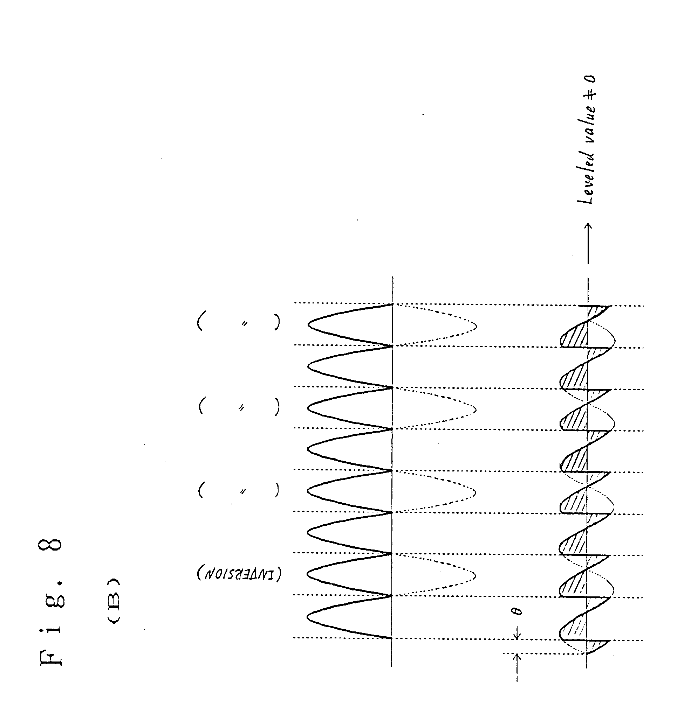

The parts of noise ingredients having high frequencies are removed by the band pass filter a1 (a2) and the leveller element c1 (c2) in said signal treatment means B. The parts of noise ingredients having the same one frequency as the fluid flow modulation frequency F2 (F1) of the other fluid flow modulation means V1 (V2) generated by the fluid flow modulation means V1 (V2) in the system having one fluid flow modulation frequency F1 (F2) is mainly caused by mechanical factors. These noise ingredients cannot be effectively of said synchronous detection-rectification means b1, b2. Fig. 8-(A), (B) are showing the case where, for example, one fluid flow modulation frequency F1 is set at 1Hz while the other fluid flow modulation frequency F2 is set at 2Hz and usually shows a difference from the original signal in phase of $\theta$ (its value is unknown). Accordingly, the levelled value does not amount to 0, whereby remaining the errors of measurement.

Accordingly, the following third measure is adopted to provide an apparatus for analyzing a fluid by a multi-fluid flow modulation mode provided with a mechanism capable of easily and reliably correcting errors of measurement due to the above described causes. That is, "errors of measurement due to the interferential noise ingredient having the same one frequency signal from the other system in the system with one frequency signal as the measured signal".

The errors of measurement due to the interferential noise ingredients of the same frequency signal from the other system in the system with one frequency signal as the measured signal are corrected by forming said both fluid flow modulation means V1, V2 of a rotary valve. This rotary valve is provided with a passage-changing over rotor, which can be rotated and driven at an appointed period within a housing. Said housing is provided with an inlet port for the sample fluid S1 or S2, an inlet port for the reference fluid R1 or R2, an outlet port connected to said analytical portion A and a discharge port. With these rotary valves a method is used in that the relative phase relation between the fluid flow modulating operations of said both rotary valves is regulated by regulating and setting the initial relative position relation between the housing and the rotor in at least one of said both rotary valves.

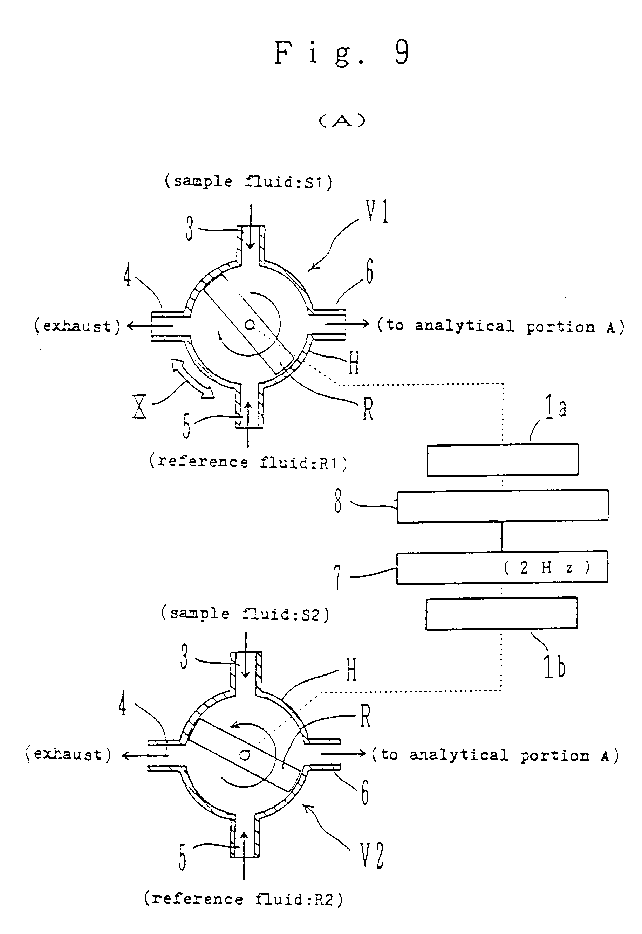

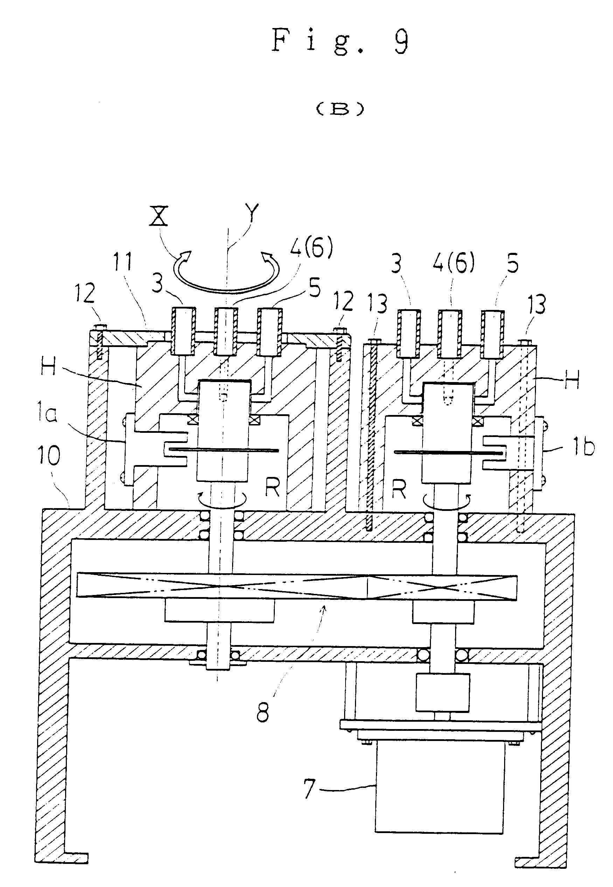

The concrete construction is indicated in Fig. 9(A), (B). Said respective fluid flow modulation means V1 (V2) are composed of rotary valves provided with the passage change-over rotor R capable of being rotated and driven at the appointed period by means of the driving mechanism which will be mentioned later. The rotor R is disposed in the housing H provided with an inlet 3 for the sample fluid S1 (S2), an inlet 5 For the reference fluid R1 (R2), an outlet 6 connected to the analytical portion A and an exhaust port 4 connected to the exhaust passage.

Both rotary valves are set so that the ratio of the fluid modulation frequencies F1, F2 may be even numbers or reciprocals thereof, as described above (for example, F1 = 1Hz and F2 = 2Hz).

As it will be described later, in at least one (in this preferred embodiment V1) of said both fluid modulation means (rotary valves) V1, V2 the housing H is adapted to be shifted or to be fixed. The housing H can be rotated or fixed around the axis of rotation Y of the rotor R corresponding thereto, as indicated by the white arrows X of Fig. 9(A), (B). Therefore, the initial relative position relation between the housing H and the rotor R may be optionally regulated.

The housing H of said one fluid modulation means (rotary valve) V1 is adapted to be fixedly pressed against a base plate 10 in an optional rotary posture by means of a counter plate 11. The counter plate 11 is fixedly mounted on said base plate 10 by bolts 12 when it is slidably and rotatably placed on said base plate 10 under the free condition. Accordingly, if the housing H is detached by loosening the bolts 12 or by removing them together with the counter plate 11, the rotary position of the housing H can be easily and optionally regulated and set. On the contrary, the housing H of the other fluid flow modulation means (rotary valves) V2 is adapted to be directly and fixedly mounted on said base plate 10 in an appointed position.

The driving mechanism for said both rotors R is as follows: According to the present preferred embodiment, the rotor R of the rotary valve comprising the fluid flow modulation means V2 having the higher fluid flow modulation frequency (2Hz) is directly rotated and driven by a motor 7, the rotation frequency of which is controlled at 2Hz. The rotor R of the rotary valve composing the fluid flow modulation means V1 having the lower fluid flow modulation frequency (1Hz) is rotated and driven by a reduction gear mechanism 8 for reducing the rotation frequency of said motor 7 to 1/2. An axis of rotation system from said motor 7 to the rotor R of the fluid flow modulation means V1 and an axis of rotation system from said reduction gear mechanism 8 to the rotor R of the fluid flow modulation means V2 are provided with a synchronous signal generator 1a, 1b, respectively. Such generator 1a or 1b can be an optical synchronous signal generator (for example photointerrupter and the like). This is for forming and supplying a frequency signal expressing an actual modulating action by the respective fluid flow modulation means V1, V2 for the synchronous detector-rectifier b1, b2 in said signal treatment means B.

As described above, both fluid flow modulation means V1, V2 are composed of the rotary valve. Each valve is provided with the passage change-over rotor R capable of being rotated and driven at an appointed period disposed in the housing H. This housing H is provided with the inlet 3 of the sample fluid S1 or S2, the inlet 5 of the reference fluid R1 or R2, the outlet 6 connected to said analytical portion A and the exhaust port 4. In at least one of said both rotary valves said housing H is adapted to be rotated or fixed around the axis of rotation Y of said rotor R, so that the relative phase relation between the fluid flow modulation operations by said both rotary valves can be optionally regulated by regulating the initial relative position relation between the housing H and the rotor R. That is, "the errors of measurement due to the interferential noise ingredients having the same one frequency signal from the other system in the system with one frequency signal as the measured signal" can be reliably corrected by merely the remarkably easy operation that the housing H of the rotary valve in said one system is rotated with watching an indicator. Therefore, the errors of measurement may amount to almost 0 to regulate the initial relative position relation between the housing H and the rotor R corresponding thereto. This is possible even though errors of measurement due to the unknown difference in phase, as shown in said Fig. 8(A) or (B) by the lower graph therein, are brought about in the measured value in the other system under the condition that for example a span fluid flows through only one measurement system as the sample fluid.

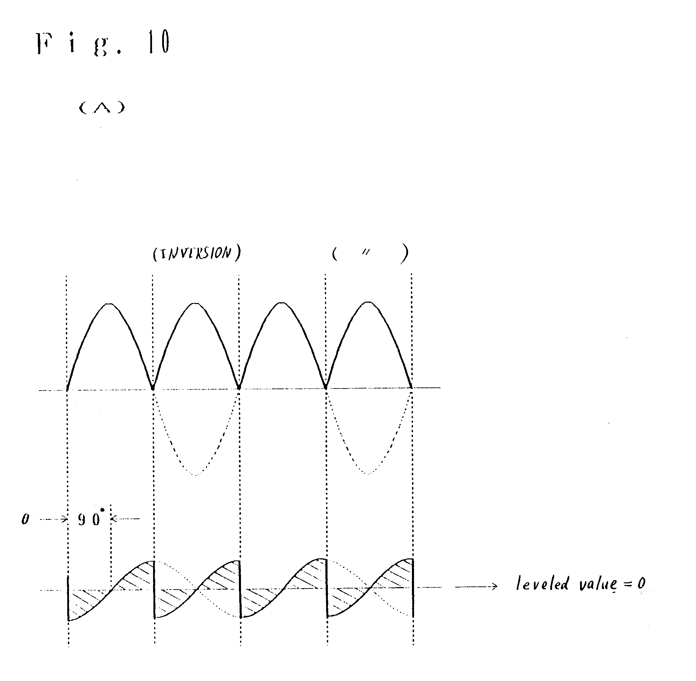

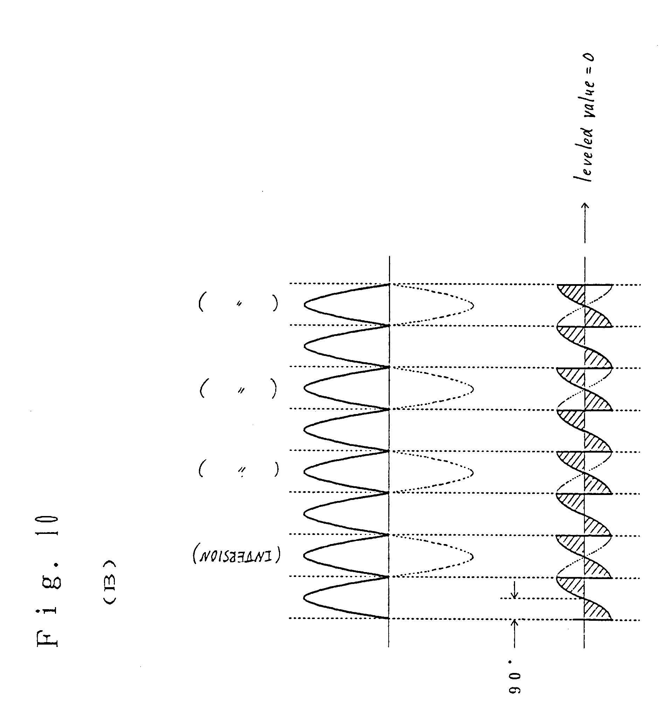

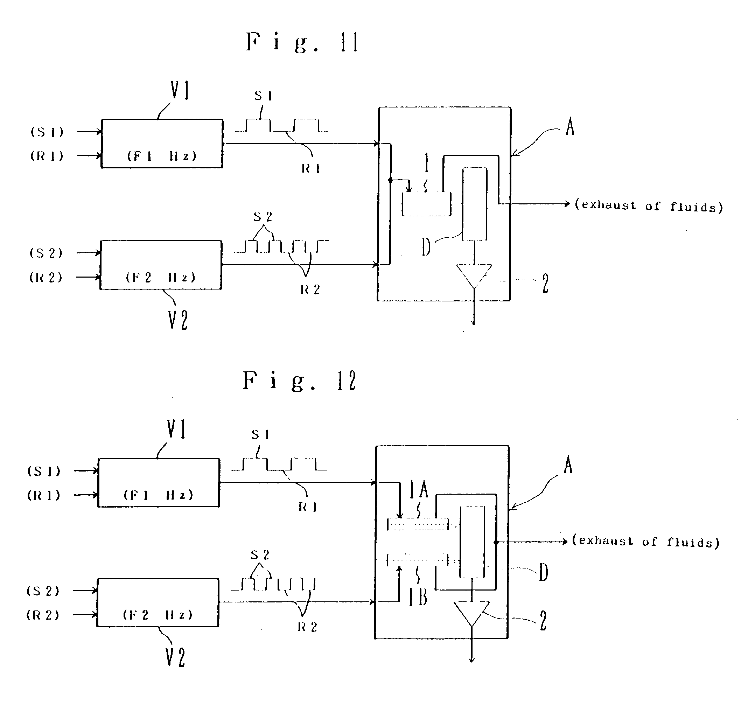

The interferential noise ingredients having said same one frequency signal are corrected by such the regulating operation so that the difference from the original signal in phase may be turned to 90° ($\pi/4$) from the optional value $\theta$, as shown in Fig. 10-(A) or (B). Thereby being subjected to the synchronous detection-rectification, as shown in the drawing, to turn the levelled value to 0.

In addition, the construction in which the housing H is adapted to be rotated or to be fixed relatively to the rotor R merely for the rotary valve composing one fluid flow modulation means V1, as shown in the above described preferred embodiment, can be used for the other fluid flow modulation mean V1 as well. Both rotary valves composing the respective fluid flow modulation means V1, V2 may have such a construction.

Both rotors R of said both fluid modulation means (rotary valves) V1, V2 are driven by one motor 7 and the reduction gear mechanism 8 as shown in the above described preferred embodiment. In contrast said both rotors R may be individually driven by separate motors having rotation frequencies different to each other.

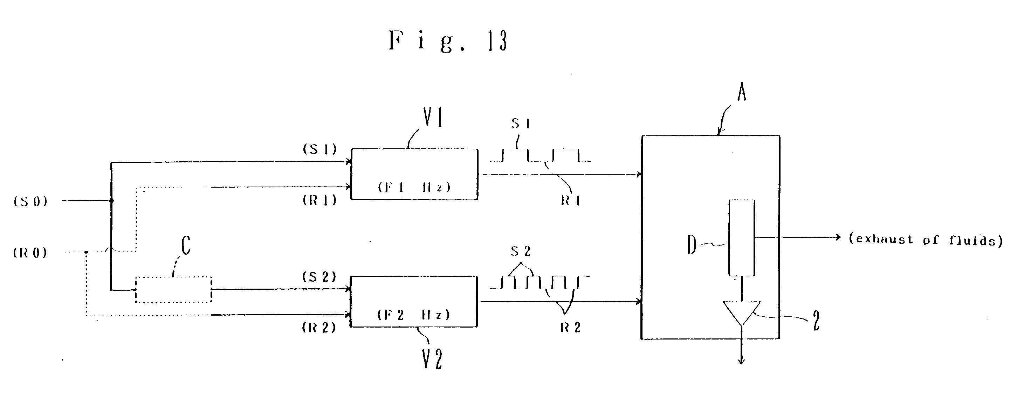

Fig. 11 relates to a second preferred basic embodiment and shows a rough sketch of principal parts in an apparatus for analyzing a fluid by a multi-fluid flow modulation mode according to the present invention. This apparatus is applied to the case where the concentration of $CO_x$ and the like has to be analyzed contained in for example the atmosphere and sample fluids such as exhaust fluids from plants.

In this case, the analytical portion A of the apparatus generally comprises a nondispersive type infrared analyzer (NDIR). Therefore, detectors of the type, through which the sample fluid does not directly pass such as pneumatic type detectors using a condenser microphone mode, microflow mode or the like, thermopiles or solid detectors such as semi-conductors, are used as the sensor D. And, as shown in this Fig. 11, in the case where the analytical portion A comprises a so-called single-cell type NDIR in which only one cell 1 is used both flow modulated sample fluids S1, S2 are supplied to said cell 1 under mixed condition in the same manner as in the above described first preferred embodiment. The absorptivity of infrared rays of the sample fluids S1, S2 to be measured passing through the cell 1 is measured by the sensor D.

Other constructions and the like are equal to the above described first preferred basic embodiment. Members having the same functions as in the first preferred embodiment are marked with the same reference numerals. Therefore, the description thereof is omitted.

Fig. 12 relates to a third preferred basic embodiment and shows a rough sketch of principal parts in an apparatus for analyzing a fluid by a multi-fluid flow modulation mode according to the present invention. This apparatus is applied to the case where the concentration of $CO_x$ and the like has to be determined likewise.

In this case, the analytical portion A comprises a so-called double-cell type nondispersive infrared analzyer (NDIR) provided with two cells 1A, 1B, so that both flow modulated sample fluids S1, S2 are not mixed with each other. The sample fluids S1 and S2 are supplied to the respective cells 1A, 1B. However, the absorptivity of infrared rays of the respective sample fluids S1, S2 to be measured passing through the respective cells 1A, 1B is simultaneously measured by only one sensor D. In addition, one of said two cells 1A, 1B is provided with a solid filter (not shown) for use in the measurement of CO while the other of said two cells 1A, 1B is provided with a solid filter (not shown) for use in the measurement of $CO_2$.

Since other constructions and the like are same as in said first preferred basic embodiment and second preferred basic embodiment, members having the same functions are marked with the same reference numerals.

The plurality of sample fluids S1, S2 may be originally different as in the case where they are individually led from a plurality of exhaust passage. A single sample fluid S0 may be divided into a plurality of sysetms, as shown in Fig. 13. In general, the latter is applied to the case where CO and $CO_2$, NO and $NO_2$ or methane and HC other than methane (NMHC) in the same one sample fluid are simultaneously and continuously measured and the like. But, in this case, usually at least one system is provided with a convertor C for converting $NO_2$ to NO or converting CO to $CO_2$ and with a non-methane HC remover or a necessary filter and the like. In addition, as shown by dotted lines in Fig. 13, a common reference fluid R0 (for example zero gas) may be used also for said reference fluids R1, R2.

The applied preferred embodiments according to the present invention are described below.

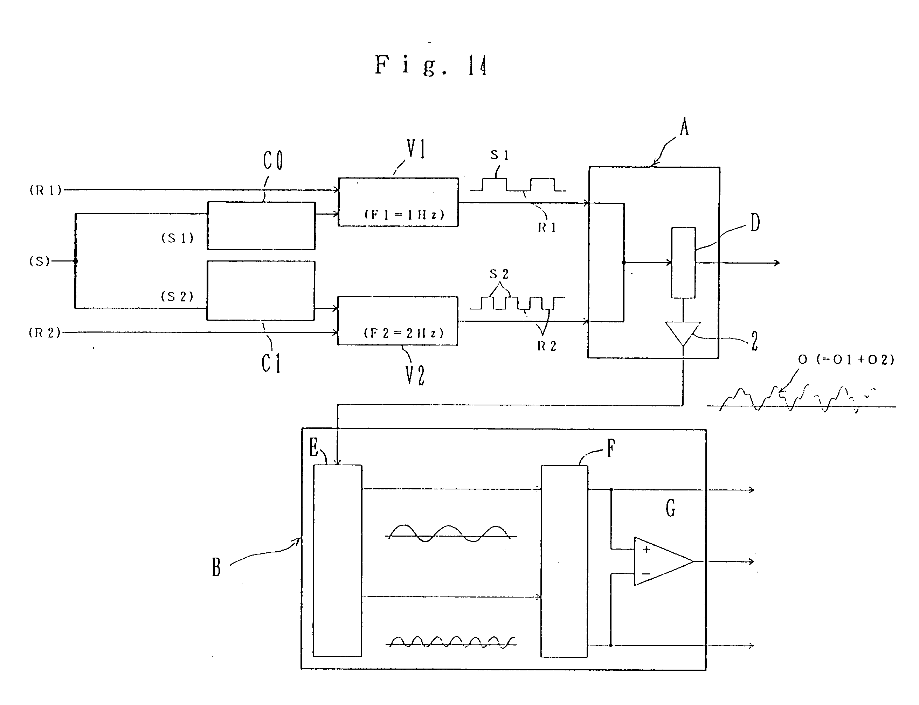

Fig. 14 shows an apparatus for analyzing a fluid for use in the simultaneous and continuous measurement of three HC ingredients by differential method and multi-fluid modulation mode constructed as first applied preferred embodiment corresponding to said first preferred basic embodiment. This is used in the case where HC ingredients contained in a sample fluid S, such as air, exhaust gas from cars and exhaust gas from plants, non-methane HC (the second ingredient), which is particularly noxious ingredient, are analyzed to obtain the respective concentrations. To this end, the single concentration of methane ($CH_4$) which is the first ingredient and the concentration (the total concentration of HC) of the third ingredient defined as the sum of the first ingredient and the second ingredient are directly measured, whereas the single concentration of non-methane HC which is said second ingredient is indirectly measured. This second ingredient is the difference between said both measured results of concentration of said frist and third ingredients.

The sample fluid S is divided into the first sample fluid S1 and the second sample fluid S2. The passage of said second sample fluid S2 is selected as a line for measuring the single concentration of methane ($CH_4$) which is the first ingredient. This is obtained by providing a buffer tank C1 composed of a catalyzer apparatus having two functions. The first function is as a buffer for lightening the transition response for the interferential influence upon the measuring system of the first sample fluid S1 when the concentration of the second sample fluid S2 is suddenly changed. The second function is as a convertor for burning and removing non-methane HC which is the second ingredient of the second sample fluid S2 and the like. While the passage of said first sample fluid S1 is selected as a line for measuring the concentration of the third ingredient (the total concentration of HC) by providing a buffer tank C0. This buffer tank C0 is having merely the function as a buffer for lightening the transition response for the interferential influence upon the measuring system of the other second sample fluid S2 when the concentration of merely the first sample fluid S1 is suddenly changed.

The second sample fluid S2 converted by the buffer tank C1 (in short, non-methane HC is removed and merely methane is contained as HC) and the first sample fluid S1 not converted (in short, same as the initial sample fluid S containing both non-methane HC and methane) are subjected to the fluid flow modulation. The fluid flow modulation is carried out at the frequencies F1, F2 different to each other (in this preferred embodiment F1 = 1Hz, F2 = 2Hz) by the use of the fluid flow modulation means V1, V2 and the reference fluids R1, R2.

The respective sample fluid and the respective reference fluid are alternately passed at the appointed frequency and then the respective and flow modulated sample fluids S1, S2 are simultaneously and continuously supplied to the analytical portion A having merely one HC sensor D.

In this case, a HC sensor is used in said analytical portion A through which the sample fluid directly passes. Such a sensor is e.g. a flame ionization detector (FID). Therefore, both flow modulated sample fluids S1, S2 (R1, R2) are supplied to said HC sensor D in the form of a mixture.

Accordingly, the signal O supplied from said HC sensor D through the preamplifier 2 is obtained as one measured signal (O = O1 + O2) comprising individual measured signal components O1, O2 corresponding to both sample fluids S1, S2 in a lump, as schematically shown.

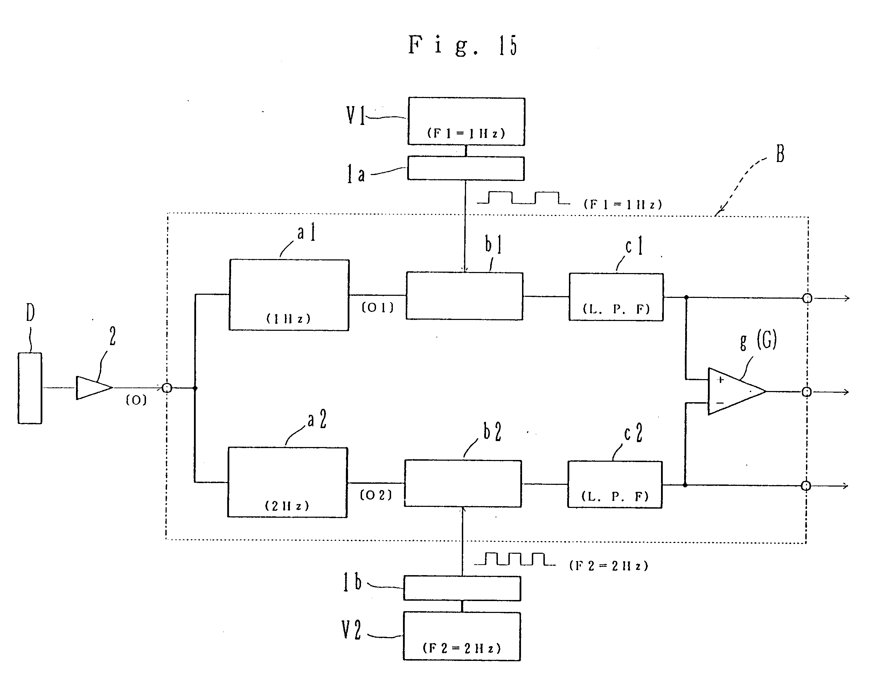

The signal treatment is carried out by the use of the signal treatment means B. In this signal treatment means B the output signal O from said HC sensor D, as schematically shown in Figs. 14 and 15, is divided into the signal components O1, O2 of the respective modulation frequencies F1, F2 for said respective sample fluids S1, S2 for rectification and levelleling. Said signal treatment means B comprises a frequency-dividing circuit E, a signal-rectifying circuit F and a substracter G in combination. Thus, not only the analyzed values about said respective sample fluids S1, S2 can be individually and directly obtained but also the single concentration of said second component (non-methane HC) can be indirectly measured by subtraction of said both measured results of concentrations. Therefore, the analyzed values are the measured results of the single concentration of said third component (total HC) and the concentration of said first component (methane).

In addition, the concrete circuit construction of said signal treatment means B is shown in Fig. 15 which is a block circuit diagram. The positive input of the subtracter G is supplied with an output signal from the leveller element c1 which is a part of the signal treatment system for said first sample fluid S1. An output signal from the leveller element c2 being an element of the signal treatment system for said second sample fluid S2 is supplied to a negative input of said subtracter G. The subtracter G is provided in addition to the circuit shown in said Fig. 4. Accordingly, the measured result of the concentration of total HC as the third component is supplied from said leveller element c1, the measured result of the single concentration of methane as the first component is supplied from said leveller element c2. The measured result of the single concentration of non-methane HC as the second component is given out from said subtracter G.

However, the apparatus for analyzing a fluid for use in the simultaneous and continuous measurement of three HC components according to the above described first applied preferred embodiment adopts the construction that the buffer or convertor C1 for removing non-methane HC from the original sample fluid S is provided. But, this convertor C1 has exhibited fundamental functional defects in that also methane which is not to be removed is removed in a quantity of about 5 to 10 % under the condition that non-methane HC can be completely burnt and removed. While non-methane HC cannot be completely removed under the condition that methane can be completely remained. Furthermore, the catalytic efficiency of this convertor C1 changes with a lapse of time. This errors of measurement are inevitable. In addition, the concentration of non-methane HC which is the most important component to be measured cannot be directly measured. This component can be merely obtained indirectly as the difference between the concentration of total HC and the concentration of methane. Thus, there is the possibility that the errors are also in the subtraction of the measured results of said both concentrations.

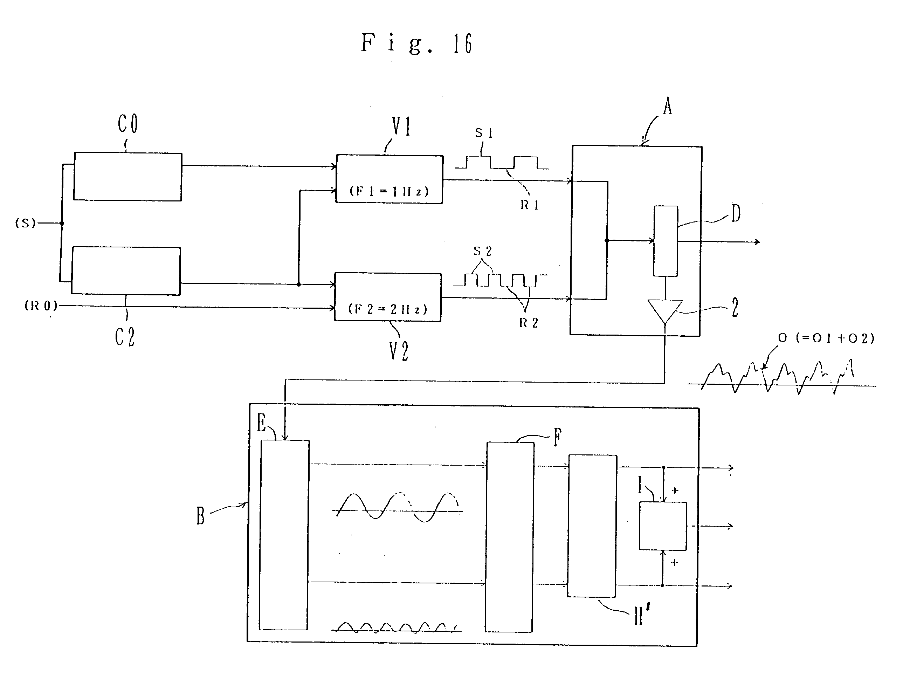

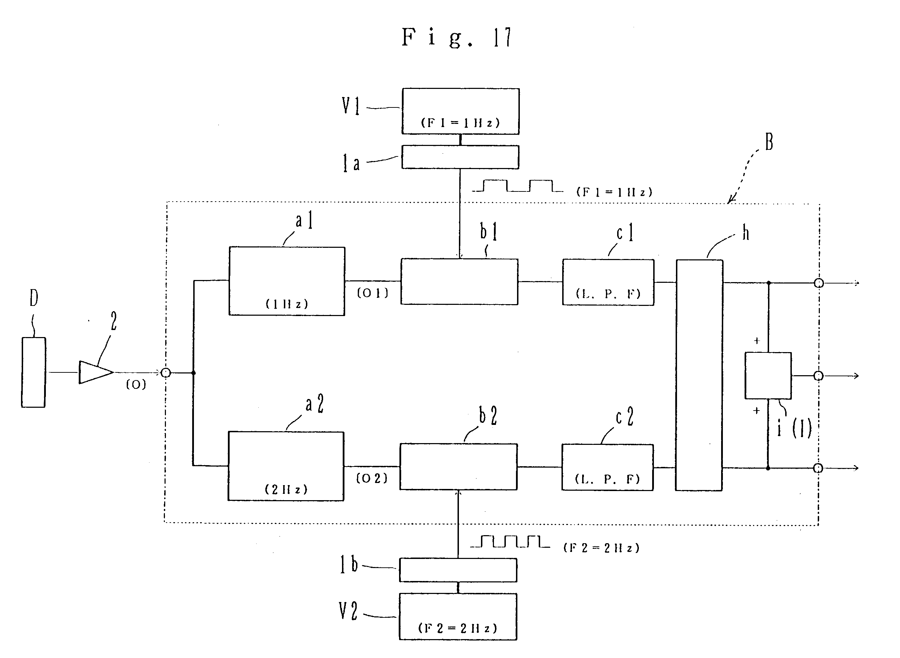

The apparatus for analyzing a fluid for use in the simultaneous and continuous measurement of three HC components according to the second applied preferred embodiment shown in Fig. 16, 17 is devised so as to eliminate the above described problems.

As shown in Fig. 16, the sample fluid S, such as air, exhaust gas from cars and exhaust gas from plants, is divided into two passages. One of said two passages being provided with a mere buffer tank (dummy) C0 through which the original sample fluid S flows as it is, i.e. as a non-converted sample fluid S0. The other passage being provided with a convertor C2 comprising a catalytic apparatus for completely burning and removing non-methane HC of HC components contained in the sample fluid S and the like flowing through this comvertor C2. By this a converted sample fluid SI is obtained of the downstream side of the convertor C1.

Said non-converted sample fluid S0 which is the same as the original sample fluid S containing both non-methane HC and methane and said converted sample fluid SI from which non-methane HC is removed and containing merely methane as HC are subjected to the fluid flow modulation by the use of the suitable fluid flow modulation means V1, V2, respectively. This fluid flow modulation is carried out with said converted sample fluid SI and a zero fluid or gas R0 as the reference fluid, respectively, at frequencies F1, F2 different to each other (in this preferred embodiment F1 = 1Hz, F2 = 2Hz). The sample fluid S and the reference fluid R are alternately passed at the appointed frequency. Then, the respective sample fluids SI (and R0), SO (and SI) which are flow modulated are simultaneously and continuously supplied to the analytical portion A. Said analytical portion A is provided with only one HC sensor D. In this case, a sensor through which the sample fluid directly passes, such as a flame ionization detector (FID), is used as the HC sensor D in said analytical portion A. Therefore, said both flow modulated sample fluids SI, SO are supplied to said HC sensor D as a mixture.

Accordingly, the signal O supplied from said HC sensor D through the amplifier 2 is obtained as one measured signal (O = O1 + O2) comprising individual measured signal components O1 and O2. The signal component O1 is the concentration of total HC based on the concentration of methane, in short, the signal about non-methane HC. O2 indicates the signal about the concentration of methane. These signals O1 and O2 correspond to both sample fluids SI, SO in a lump, as schematically shown.

So, the signal treatment in which the output signal O from said HC sensor D, as schematically shown in Fig. 16, is divided into the signal components O1 and O2 with the respective modulation frequencies F1 and F2 for said respective sample fluids SI, SO to rectify and to level is carried out by the use of the frequency-dividing circuit E and the signal-rectifying and levelling circuit F in the signal treatment means B. Thus, not only the analyzed values about said respective sample fluids SI, SO, in short, the fundamental measured results of the concentration of non-methane HC and the single concentration of methane, can be individually and directly obtained but also the fundamental measured results of both non-methane HC and methane are corrected by a correcting means H', which will be mentioned later in detail, respectively. This is carried out to compensate the errors of measurement due to the fundamental defects of said convertor C. Besides, the concentration of total HC can be indirectly measured by means of an adding means I for adding both corrected measured results of the concentration of both non-methane HC and methane.

In addition, the concrete circuit construction of said signal treatment means B is shown in Fig. 17 which is a block circuit diagram. The correcting circuit h included in said correcting means H' for the correcting circuit F for calculating the corrected concentrations of non-methane HC and methane by a method which will be mentioned later. This method is carried out on the basis of said fundamental concentration signals of non-methane HC and methane obtained by said both leveller elements c1, c2. The correcting circuit H' is provided downstream of both leveller elements c1, c2. Furthermore, the correct concentration of total HC can be supplied by an adding circuit i included in the adding means I for calculating a sum of the correct concentrations of non-methane HC and methane put out from the correcting circuit h.

The correction for the fundamental concentration signals of non-methane HC and methane by said correcting circuit h is carried out as follows:

Provided that a true concentration of methane contained in the sample fluid S is p, a true concentration of non-methane HC being q, and an oxidation (combustion) coefficient of methane in the convertor C1, of which the oxidation (combustion) coefficient of non-methane HC is set at 100 %, being K, a fundamental measured concentration p' of methane supplied from the leveller element c2 in said signal treatment means B and a fundamental measured concentration q' of non-methane HC supplied from the leveller element c1 is expressed by the following equation (1), (2), respectively.

$$p' = X(1 - K)p \qquad (1)$$

$$q' = Y[(p + q) - (1 - K)p] = Y(Kp + q) \qquad (2)$$

(wherein X, Y are coefficients determined depending upon the measuring apparatus).

Accordingly, if three unknown coefficients K, X, y in these two equations become clear, the true concentrations of methane and non-methane HC p, q can be obtained by the operation on the basis of the fundamental measured results p', q'.

So, for example in the compensation of the apparatus,

(1) since p = 0 and q is known,

$$q' = Yq$$

holds good from said equation (2) by carrying out the measurement using propane ($C_3H_8$), which is one kind of non-methane HC, of the known concentration as the compensation gas. Therefore, the coefficient Y is calculated from q' (the fundamental measured concentration supplied from the leveller element c1)/the true known conentration p, q.

(2) Subsequently,

$$p_1' = X (1 - K)p_1$$
$$p_2' = X (1 - K)p_2$$

hold good from the equation (1) by carrying out the measurements in turn using a mixture gas comprising methane ($CH_4$) and pure air having two kinds of known concentrations $p_1$, $p_2$ as the compensation gas. Thus, the other two coefficients X, Y can be calculated with the above described both equations on the basis of $p_1'$, $p_2'$ (the fundamental measured concentrations put out from the leveller element c2) and the known true concentrations $p_1$, $p_2$.

Accordingly, if three coefficients which are obtained in the above described manner when compensated are set in said correcting circuit h. The correcting circuit h can operate and supply the correct values of the concentrations of non-methane HC and methane from said equations (1), (2) on the basis of the fundamental measured concentrations q', p' of non-methane HC and methane supplied from said both leveller elements c1, C2 during the measurement.

As above described, in the apparatus according to this applied preferred embodiment the non-converted sample fluid SO in one passage is subjected to the fluid flow modulation at the frequency F1 with the converted sample fluid SI as the reference fluid (in short, the concentration of methane contained in said converted sample fluid SI is the standard), while the converted sample fluid SI obtained by removing non-methane HC in the sample fluid S by means of the convertor C1 in the other passage is subjected to the fluid flow modulation at the frequency F2 with the zero fluid R0 as the reference fluid. Furthermore, in the signal treatment means B not only the output signal O from said only one HC sensor D is at first divided into said respective signal components O1, O2 of the respective modulation frequencies F1, F2 by the use of the suitable frequency-dividing means E and the signal-rectifying and levelling means F to rectify and level, whereby the concentration of methane and the concentration of non-methane HC can be individually and directly obtained but also the measured result of the concentration of non-methane can be corrected by means of the suitable correcting means H. These correcting means H' utilise said measured result of the concentration of methane, so that the errors of measurement due to the fundamental functional defects of the convertor C1 for use in the removal of non-methane HC can be effectively compensated.

Furthermore, as described above, the concentration of non-methane HC, which is the most important object component to be measured, can be directly measured, so that it is not always necessary to measure the concentration of total HC as in said conventional apparatus and the apparatus according to the preceding application. Accordingly, the measurement for obtaining the difference between the concentration of total HC and the concentration of methane becomes unrequired in principle. Thereby not only the signal treatment means can be simplified but also there is no possibility that the errors accompanied by the subtraction are brought about.

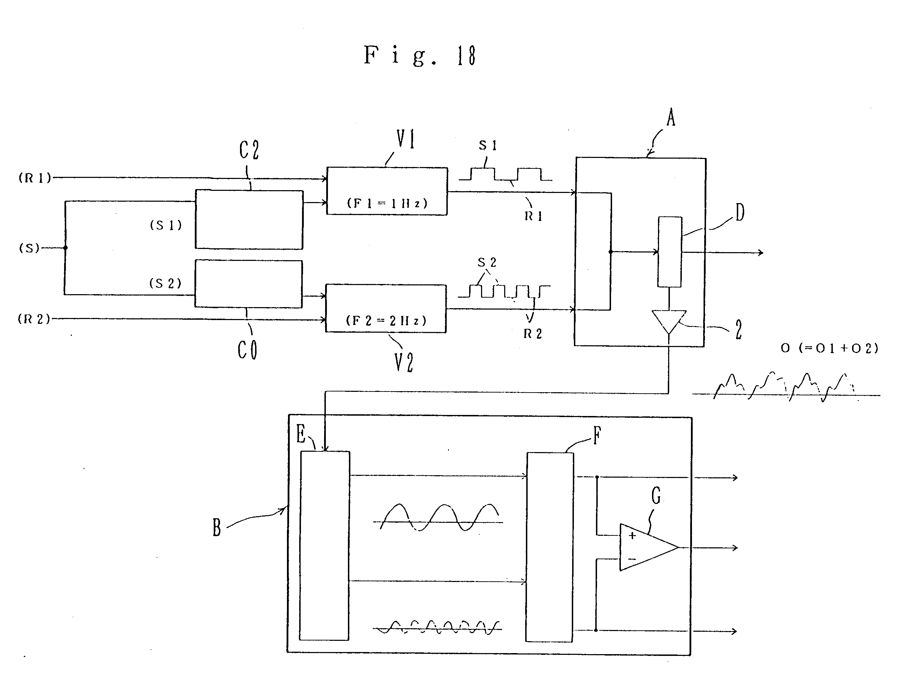

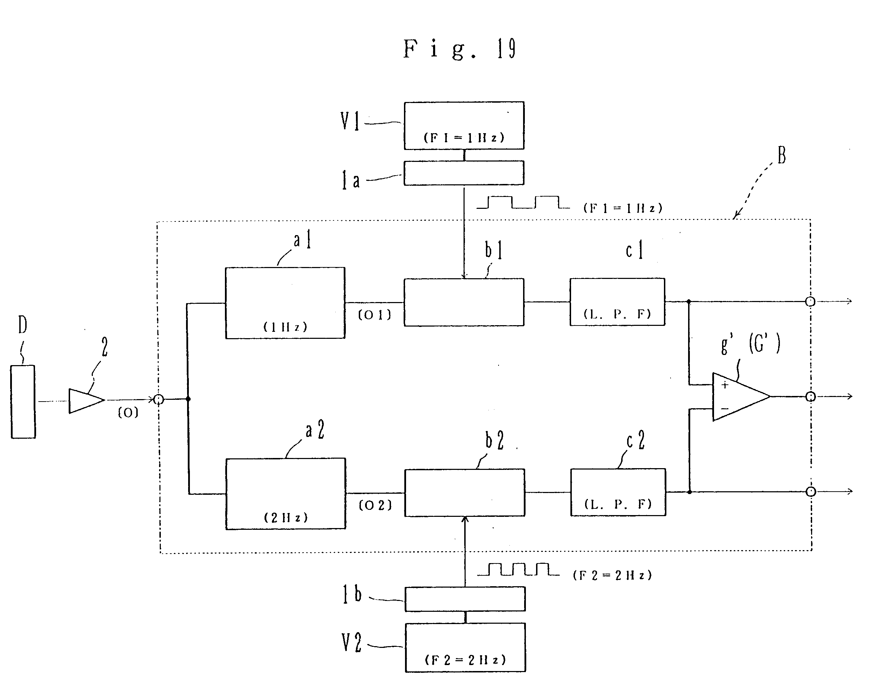

Figs. 18, 19 show an apparatus for analyzing a fluid for use in the simultaneous and continuous measurement of three $NO_x$ components using the differential method and the multi-fluid flow modulation mode according to the third applied preferred embodiment corresponding to said first preferred basic embodiment. Also this apparatus is used in the case where the concentration of $NO_2$ (the second component) is analyzed which is a noxious part of $NO_x$ components contained in the sample fluid S, such as air, exhaust gas from cars and exhaust gas from plants. To this end, the single concentration of NO, which is the first component, and the concentration of the third component (total concentration of NO) defined as the sum of both the first component and the second component are directly measured and the single concentration of $NO_2$ which is said second component, is indirectly measured from the difference between the measured results of said both concentrations.

In the apparatus according to this preferred embodiment, as obvious from Fig. 18 the catalytic apparatus and the like for carrying out the treatment of converting (reducing) $NO_2$ which is the second component into NO which is the first component, is used as the convertor C2. The convertor C2 is provided in the passage of the first sample fluid S1. A NO sensor, such as a chemical luminescence detector (CLD) is used as the sensor D in the analytical portion A.

Accordingly, in this case the passage for the first sample fluid S1 provided with said convertor C2 becomes a line for measuring the concentration of the third component (total concentration of NO) in the first sample fluid S1. The passage for the second sample fluid S2 provided with the buffer tank (dummy) C0 becomes a line for measuring the single concentration of NO which is the first component. As a result, as obvious also from Fig. 19, the measured result of the concentration of the third component (total concentration of NO) is supplied from the leveller element c1 in the system of the first sample fluid S1. The measured result of the single concentration of NO, which is the first component, is supplied from the leveller element c2 in the system of the first sample fluid S2, and the measured result of the single concentration of $NO_2$, which is the second component, is supplied from the subtracter g' as a subtracting means G'.

In the apparatus according to the above described three applied preferred embodiments, the convertor C2 (C1) having also the function as the buffer tank is provided in the passage for the sample fluid S1 (S2) to the fluid flow modulation means V1 (V2). The buffer tank C0 as the dummy is provided in the passage for the sample fluid S2 (S1) to the other fluid flow modulation means V2 (V1). The reason of this is described below.

Since the above described factors for the errors of measurement, such as the incomplete cutting-off characteristics of the band pass filters a1, a2 and the difference between the fluid flow modulation means V1, V2 in mechanical duty, have the property of being brought about at all times. The average value can be turned almost to 0 within the usual (sufficiently long) measuring time by using the above described measure. Thus, "both fluid flow modulation means V1, V2 are set so that the ratio of the fluid flow modulation frequencies F1, F2 may be even numbers or reciprocals thereof". But, when said converter C1 (C2) and buffer tank CO do not exist in the case where the concentration of the sample fluid S1 is suddenly changed in an instant (for example in a stepped manner) so-called beard-like noises x are produced in the output signal from the other measuring system (the side having the fluid flow modulation frequency of 2Hz) as a transition response for the interferential influence. For example, in the case where the zero-span calibration is carried out prior to the measurement in order to carry out an initial regulation of one measuring sysem (in this drawing the side having the fluid flow modulation frequency of 1Hz), the condition in which the zero fluid is passed through that measuring system as the sample fluid S1 is changed over to the condition in which the span fluid is passed through that measuring system as the sample fluid S1. According to the result by the simulation, it is obvious that the errors of measurement due to the production of such the beard-like noises x amount to even several percents. Furthermore, it goes without saying that this phenomenon is not shown but similarly appears in an output signal from one measuring system (the side of 1Hz) also in the case where the initial regulation of the other measuring system (the side of 2Hz) is carried out. In addition, this phenomenon can appear not only during the zero-span calibration which was herein described, but also during the measurement.

In addition, this is the reason why the beard-like noises x due to the above described transition response interferential influence are produced while the sudden change of concentration of this type has the property to be produced at an optional timing (phase) and in an instant. Accordingly, the errors of measurement due to the beard-like noises x by such the transition response interferential influence can not be cancelled in a time integration manner as the above described factors of the errors of measurement having the property to appear at every times.

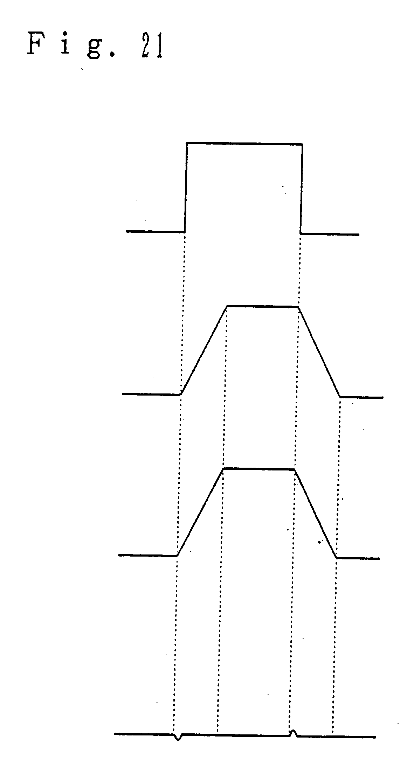

Therefore, in view of the above described circumstances, in the apparatus according to said respective applied preferred embodiments the construction in which the convertor C1 (C2) or the buffer tank C0 as the dummy are provided in the passages for the sample fluids S1, S2 to said both fluid flow modulation means V1, V2 as the buffer tank is adopted lightening the influence of the transition response interference upon the measuring system of the other sample fluid S2, S1 when the concentration of the sample fluid S1, S2 is suddenly changed. Thus, as schematically shown in Fig. 21, even though the concentration of the sample fluid S1 (S2) introduced into one measuring system is suddenly changed (changed in a stepped manner), the sample fluid S1 (S2) is subjected to the relaxation of the sudden change in concentration in said buffer tank C1 or C2 (C0) and then supplied to the fluid flow modulation means V1 (V2). Accordingly, not only the original measurement of concentration in one measuring system can be carried out without hindrance but also the influence of the transition response interference upon the other measuring system, that is, the generation of the beard-like noises x can be reduced as far as possible.

Fig. 22 shows one example of a two-component measurement type infrared gas analyzer constructed as the fourth applied preferred embodiment corresponding to said third preferred basic embodiment. This embodiment is adapted to measure CO and $CO_2$ simultaneously as object components to be measured. Referring to Fig. 22, reference numerals 1A, 1B designate cells disposed in parallel to each other and reference numerals 13, 14 designate light sources for emitting infrared rays to the cells 1A, 1B.

Reference numeral 15D designates a solid sensor provided with solid filters 15a, 15b on a side facing to the cells 1A, 1B. These filters 15a, 15b have a body provided with two light paths for example mirror finished, so as to correspond to the cells 1A, 1B and provided with a solid sensor element 15c at a position upon which a light is incident through said light path, on the other end side of the body. One solid filter 15a is constructed as a $CO_2$ measuring filter having an absorption band at almost the same wavelengths as the characteristic absorption wavelengths of CO while the other solid filter 15b is constructed as a CO measuring filter having an absorption band at almost the same wavelengths as the characteristic absorption wavelengths of $CO_2$. Reference numeral 2 designates the preamplifier disposed on an output side of the sensor 15D.

Reference numerals V1, V2 designate fluid flow modulation means for simultaneously and continuously changing and supplying the sample gas S (S1, S2) and the reference gas R (R1, R2) to the cells 1A, 1B at an appointed period and are formed of for example a rotary valve. The modulation frequencies of the sample gas S and the reference gas R by these fluid flow modulation means V1, V2 are adapted to be different to each other. For example, the modulation frequency of the fluid flow modulation means V1 is 1Hz while that of the fluid flow modulation means V2 is 2Hz. Acccrdingly, in the case where the cells 1A, 1B are supplied with the sample gas S and the reference gas R by the fluid flow modulation means V1, V2 having the above described modulation frequencies, an output signal O comprising a signal having a band in the vicinity of the modulation frequency for the cell 1A and a signal having a band in the vicinity of the modulation frequency for the cell 1B in a lump is supplied from the sensor 15D.

B designates signal treatment means connected to the output side of the sensor 15D via the preamplifier 2. The concrete construction of the signal treatment means B is same as that shown in said Fig. 4 and is adapted to divide the output signal O supplied from the sensor 15D through the preamplifier 2 into two signal treatment systems followed by treating.

Accordingly, a signal component a corresponding to the cell 1A and a signal component b corresponding to the cell 1B are supplied from this signal treatment means B under the conditions independent to each other. Thereby the signal component a corresponding to the object component CO to be measured and the signal component b corresponding to the object component $CO_2$ to

be measured can be obtained and thus the concentrations of two object components CO, $CO_2$ can be obtained.

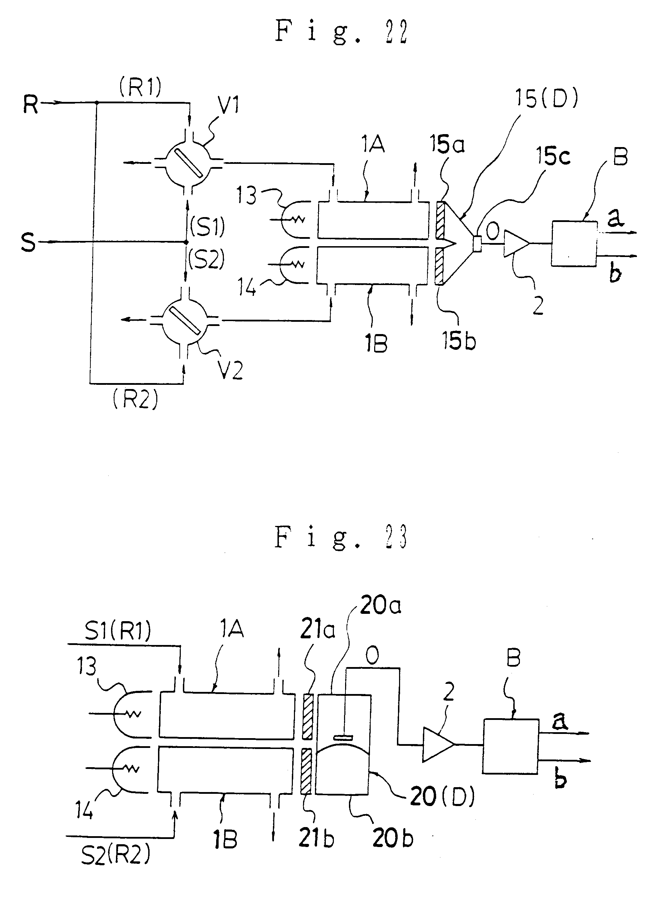

Fig. 23 shows a modification of the above described fourth applied preferred ambodiment. Referring to Fig. 23, reference numeral 20(D) designates a condenser microphone type detector comprising ligth-receiving chambers 20a, 20b disposed so as to correspond to the cells 1A, 1B, respectively. The detector 20(D) further comprises solid filters 21a, 21b being disposed between the cells 1A, 1B and the light-receiving chambers 20a, 20b, respectively. The solid filters 21a, 21b have the same construction as that of the solid filters 15a, 15b in the above described fourth applied preferred embodiment. CO and $CO_2$ are enclosed within the light-receiving chamber 20a, 20b, respectively. Other constructions and operations are same as those in the above described fourth applied preferred embodiment.

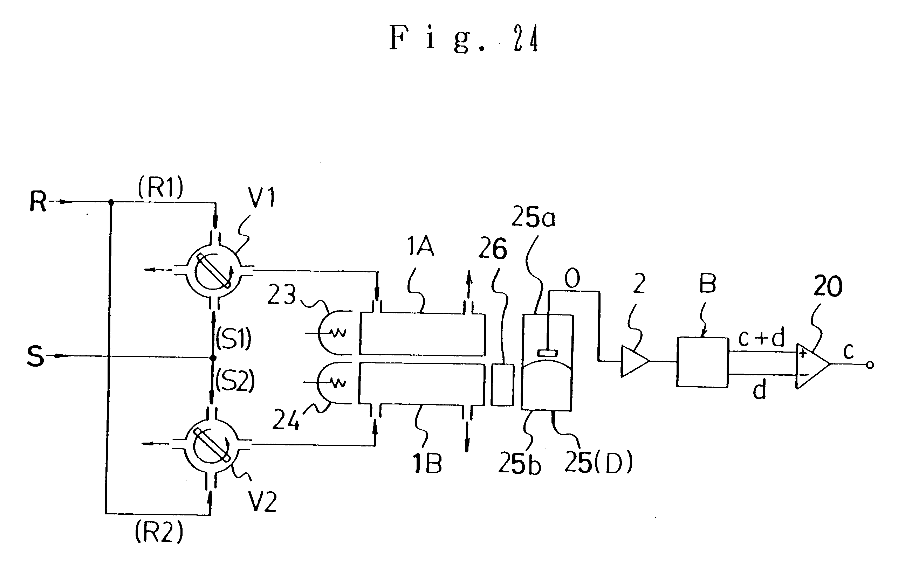

Fig. 24 shows an example of a one-component measurement type infrared gas analyzer constructed as the fifth applied preferred embodiment corresponding to said third preferred basic embodiment adapted to be capable of compensating an interferential influence by components (for example $CO_2$) other than the object component to be measured (for example CO).

Referring to Fig. 24, reference numerals 1A, 1B designate cells disposed in parallel to each other and reference numerals 23, 24 designate light sources for emitting infrared rays to the cells 1A, 1B, respectively. Reference numeral 25(D) designates a condenser microphone type detector comprising light-receiving chambers 25a, 25b disposed so as to correspond to the cells 1A, 1B, respectively, and CO is enclosed within the light-receiving chambers 25a, 25b.

A filter 26 having an absorption band at almost the same wavelengths as the characteristic absorption wavelengths of CO which is an object component to be measured is disposed in an optical path on a side of one cell 1B. Such a filter is not disposed in the optical path of the other cell 1A.

V1, V2 designate fluid flow modulation means for simultaneously and continuously changing over and supplying the sample gas S (S1, S2) and the reference gas R (R1, R2) to the cells 1A, 1B, respectively, at an appointed period. The fluid flow modulation means V1, V2 are formed of rotary valves, for example. The modulation frequencies of the sample gas S and the reference gas R of these fluid modulation means V1, V2 are different to each other. For example, the modulation frequency of the fluid flow modulation means V1 is 1 Hz while the modulation frequency of the fluid flow modulation means V2 is 2Hz. Accordingly, in the case where the sample gas S and the reference gas R

are supplied to the cells 1A, 1B by the fluid flow modulation means V1, V2 having the above described modulation frequencies, an output signal O comprising a signal having a band in the vicinity of the modulation frequency for the cell 1A and a signal having a band in the vicinity of the modulation frequency of the cell 1B in a lump is supplied from the sensor 25(D).

Reference numeral 2 designates the preamplifier and reference numeral B designates the signal treatment means. Their concrete construction is the same as that shown in Fig. 4 and is adapted to divide the output signal O supplied from the sensor 25(D) via the preamplifier 2 into two signal treatment systems.

Accordingly, a signal c + d corresponding to the cell 1A on the side where the filter is not provided (a concentration signal corresponding to the object component to be measured + the interferential component: c + d) and a signal component d corresponding to the cell 1B on the side where the filter 26 is provided (a concentration signal corresponding to the interferential component: d) are supplied from said signal treatment means B independently to each other.

Thus, the concentration signal c corresponding merely to the object component to be measured CO can be obtained by calculating a difference between said both signals c + d, d by means of a subtracter 20. Thereby an influence by the interferential component $CO_2$ can be effectively compensated without requiring any regulating operation even though only one sensor 25(D) is used. Thus, the concentration of the object component CO can be measured in high accuracy.

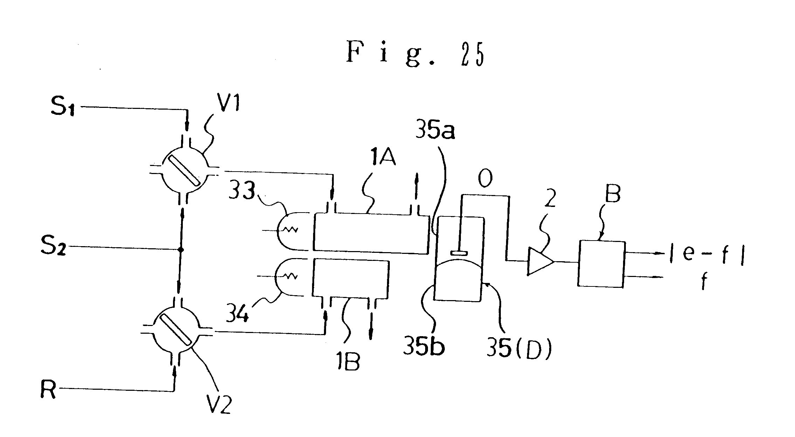

Fig. 25 shows an example of a differential concentration measurement type infrared gas analyzer constructed as a sixth applied preferred embodiment corresponding to said third basic preferred embodiment. This embodiment is adapted to measure the differential concentration of the object component and the concentration of the object component contained in the respective sample gas S1 (S2). Whereby the two sample gases S1, S2 containing the object component to be measured (for example $CO_2$) at comparatively high concentrations close to each other. This gas analyzer can be in particular preferably used in the case where an extent of $CO_2$ in air consumed by the assimilation of carbonic acid of plant is to be measured.

Referring to Fig. 25, reference numerals 1A, 1B designate long and short cells disposed in parallel to each other. Reference numerals 33, 34 designate light sources for emitting infrared rays to said cells 1A, 1B, respectively. Reference numeral 35(D) designates a condenser microphone type sensor comprising light-receiving chambers 35a, 35b disposed to correspond to the cells 1A, 1B, respectively. $CO_2$ is enclosed within said light-receiving chambers 35a, 35b. Reference numeral 2 designates the preamplifier disposed on an output side of said sensor 35(D).

Reference numerals V1, V2 designate fluid flow modulation means disposed to correspond to the cells 1A, 1B, respectively which are formed of rotary valves for example. One fluid flow modulation means V1 is adapted to change over the first sample gas S1, for example a gas obtained from a chamber, where the assimilation of carbonic acid is carried out, and having a concentration of $CO_2$ of e. The second sample gas S2 is air supplied to said chamber and having a concentration of $CO_2$ of f. These sample gases S1 and S2 are simultaneously and continuously changed over at an appointed period, for example at a modulation frequency of 1Hz. Then, the sample gases are supplied to said long cell 1A. The other fluid modulation means V2 is adapted to change over said second sample gas S2 and a reference gas R being $N_2$ and the like not containing $CO_2$ which is the object component to be measured. S2 and R are simultaneously and continuously changed over at an appointed period, for example at a modulation frequency of 2Hz, and then supplied to said short cell 1B.

Accordingly, in the case where the first sample gas S1 and the second sample gas S2, the second sample gas S2 and the reference gas R, are supplied to the cells 1A, 1B, respectively, by means of the fluid modulation means V1, V2 having the above described modulation frequencies, respectively, an output signal O comprising a signal having a band in the vicinity of the modulation frequency for the cell 1A and a signal having a band in the vicinity of the modulation frequency for the cell 1B in a lump is supplied from the sensor 35-(D).

B designates the signal treatment means having the same concrete construction as that shown in Fig. 4. The signal treatment means B is adapted to divide the output signal O supplied from the sensor 35(D) through the preamplifier 2 into two signal treatment systems.

Accordingly, signals expressing a difference |e - f| between concentrations of the object component to be measured contained in said both sample gases S1, S2 and a concentration f of the object component to be measured contained in one S2 of said sample gases, respectively, can be simultaneously obtained from said signal treatment means B. Thus, also the concentration e of the object component to be measured contained in the other sample gas S1 can be obtained on the basis of these concentration signals |e - f|.

In addition, since the second sample gas S2 containing the object component to be measured at higher concentrations is adapted to be supplied to the short cell 1B, the concentration of the object component to be measured contained in the second sample gas S2 can be measured in high accuracy. Thereby, also the concentration of the object component contained in the first sample gas S1 can be measured in high accuracy. Thus, the concentration of the object component contained in two sample gases S1, S2 at comparatively higher concentrations close to each other and the difference between the above described concentrations can be measured with high accuracy even though only one sensor 35(D) is used.

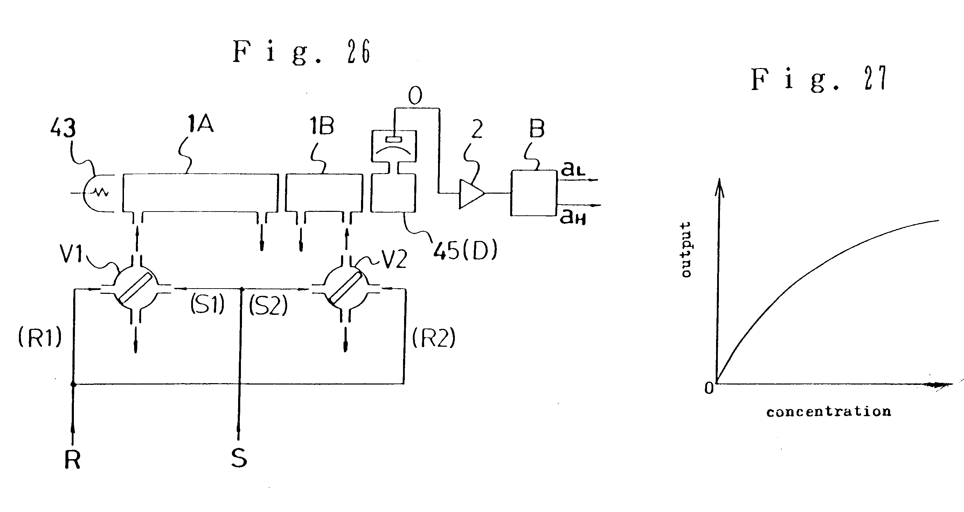

Fig. 26 shows an example of an infrared gas analyzer which is a kind of absorption analyzers constructed as a seventh applied preferred embodiment. This embodiment corresponds to said third preferred basic embodiment adapted to continuously measure from low concentrations to high concentrations. Therefore, this embodiment is preferably used for measurements of sample gases showing an increased change in concentrations.

Referring to Fig. 26, reference numerals 1A, 1B designate cells having cell lengths different to each other (hereinafter referred to as a long cell 1A and a short cell 1B) disposed in series to each other between a light source 43 for emitting infrared rays and a sensor 45(D).

Said sensor 45(D) is formed for example of a condenser microphone type detector. The same gas as an object component to be measured or a gas having an absorption band at almost the same wavelengths as the characteristic absorption wavelengths of the object component to be measured is enclosed within the sensor 45(D).

Reference numerals V1, V2 designate fluid flow modulation means for simultaneously and continuously changing over and supplying a sample gas S (S1, S2) and a reference gas R (R1, R2) to the long cell 1A and the short cell 1B, respectively, at an appointed period. The modulation means are, for example, of rotary valves. The modulation frequencies of the sample gas S and the reference gas R of these fluid flow modulation means V1, V2 are different to each other. For example, the modulation fequency of the fluid flow modulation means V1 is 1Hz, while the modulation frequency of the fluid flow modulation means V2 is 2Hz. Accordingly, in the case where the sample gas S and the reference gas R is supplied to the long cell 1A and the short cell 1B, respectively, by the fluid flow modulation means V1, V2 an output signal O is obtained. This signal O comprises a signal having a band in the vicinity of the modulation frequency for the long cell 1A and a signal having a band in the vicinity of the modulation frequency for the short cell 1B in a lump supplied from the sensor 45(D).

B designates signal treatment means connected to an output side of the sensor 45(D) through a preamplifier 2. The concrete construction of said signal treatment means B is equal to that shown in Fig. 4 and adapted to divide the output signal O supplied from the sensor 45(D) through the preamplifier 2 into two signal treatment systems.

With the infrared gas analyzer having the above described construction, if the sample gas S and the reference gas R is simultaneously and continuously supplied to the long cell 1A and the short cell 1B, respectively, at the modulation frequencies of 1Hz and 2Hz, respectively, one sensor 45(D) provided in common to the long cell 1A and the short cell 1B supplies the output signal O. This signal O comprises a signal component $a_L$ corresponding to the long cell 1A and a signal component $a_H$ corresponding to the short cell 1B in a lump. The signal component $a_L$ corresponds to a lower concentration range, for example about ppm to 1 %, whereas the signal component $a_H$ corresponds to a higher concentration range, for example 1 % or more. Moreover, since both signal components $a_L$, $a_H$ are modulated at different frequencies, the signal $a_L$ and the signal $a_H$ can be obtained by dividing the output signal O into the signal components $a_L$, $a_H$ having the respective modulation frequencies for the long cell 1A and the short cell 1B to be rectified and levelled, respectively.

As obvious from the Lambert-Beer's law also , the general absorption analyzer exhibits nonlinear output characteristics as shown in Fig. 27. On the contrary, with the apparatus according to the above described seventh applied preferred embodiment, both the lower concentration range of the object component and the higher concentration range of the object component can be obtained with high accuracy.

As obvious from the above detailed description, according to the present invention, a first one measured signal comprising the respective measured signal components corresponding to all sample fluids in an overlapped manner in a lump is obtained from only one sensor by subjecting a plurality of sample fluids to a fluid flow modulation by reference fluid, respectively. This modulation is carried out at frequencies different to each other. Then, the fluids are supplied to an analytical portion provided with only one detector simultaneously and continuously. Said respective sample fluids have been subjected to said fluid flow modulation. Then, the signal treatment in which said one measured signal is divided into the signal components having the respective modulation frequencies for said respective sample fluids to rectify and level, is carried out. Thereby the analzyed values about said respective sample fluids are obtained. That is, a peculiar and inventive measurement is used. Thus, simple and inexpensive analyzers each provided with only one sensor can be used even in the simultaneous and continuous analysis of a plurality of ingredients. The ingredients can be contained in the same one sample fluid or the simultaneous and continuous analysis of a specific ingredient contained in a plurality of different sample fluids can be carried out. Accordingly, not only the measurement system can be small-sized and simplified and the cost can be reduced easily in comparison with the conventional general method of analzying a fluid which have required a plurality of sensors, and the regulation of the sensor can be easily carried out in a short time but also no error in zero calibration and no difference in sensitivity are produced among a plurality of sensors differently from the conventional methods. Therefore, a notable effect is exhibited in that an excellent accuracy of measurement can be always secured. In addition, said signal treatment means comprises a plurality of signal treatment systems. These systems comprise the band pass filter, the synchronous detector-rectifier and the leveller element connected to each other in series in parallel. Thus, the apparatus can be remarkably simplified and inexpensive in comparison with other means using for example the computer or lock-in amplifier. Furthermore, the apparatus is adapted to carry out a frequency-dividing action. For this action there is the possibility that the use of merely the band pass filter is insufficient. But by the use of the synchronous detector-rectifier, whereby carrying out the division having a still more high accuracy, a remarkably superior effect can be exhibited. This effect is that a signal treatment capacity (S/N ratio) can be obtained which is remarkably superior to the capacity of an apparatus having such a construction that the frequency is divided by merely the band pass filter and then immediately merely the absolute value rectification is carried out.

## Claims

1.  A method for analyzing fluids, comprising the following steps:
    - subjecting a plurality of sample fluids (S1, S2, ..., Sn) to fluid flow modulation with reference fluids (R1, R2, ..., Rn) respectively, by passing said sample fluids and respective said reference fluids alternately through a fluid flow modulation means;
    - simultaneously and continuously supplying an analytical portion (A) provided with only one sample detector (D) with said respective sample fluids (S1, S2, ... Sn) which have been subjected to said fluid flow modulation; and
    - evaluating the output signal (O) from said detector (D) for obtaining analytical values of said respective sample fluids (S1, S2, ..., Sn);
    **characterized in that**
    - each sample fluid (S1, S2, ..., Sn) is modulated by a respective frequency (e. g. F1) different from the frequencies (e. g. F2, ..., Fn) with which the other sample fluids are modulated; and
    - the output signal (O) from said detector (D) is divided into signal ingredients (O1, O2, ..., On) having said different modulation frequencies (F1, F2, ..., Fn), and rectification and levelling treatment of said signal ingredients is carried out, thereby obtaining said analytical values.

2.  An apparatus fur analyzing fluids, comprising:
    - fluid flow modulation means (V1, V2, ..., Vn) for subjecting a plurality of sample fluids (S1, S2 ..., Sn) to fluid flow modulation with reference fluids (R1, R2, ..., Rn) respectively, by passing said sample fluids and respective said reference fluids alternately through said fluid flow modulation means;
    - an analytical portion (A) provided with only one sample detertor (D) to which said respective sample fluids (S1, S2, ... Sn) subjected to said fluid flow modulation are simultaneously and continuously supplied; and
    - signal treatment means (B) for evaluating the output signal (O) from said detector (D) for obtaining analytical values of said respective sample fluids (S1, S2, ..., Sn);
    **characterized in that**
    - said fluid flow modulation means (V1, V2, ..., Vn) modulates each sample fluid (S1, S2, ..., Sn) by a respective frequency (e. g. F1) different from the frequencies (e. g. F2, ..., Fn) with which the other sample fluids are modulated; and
    - said signal treatment means (B) divides said output signal (O) from said detector (D) into signal ingredients (O1, O2, ..., On) having said different modulation frequencies (F1, F2, ..., Fn), and rectifies and levels said signal ingredients, thereby obtaining said analytical values.

3.  An apparatus according to claim 2, wherein said treatment means (B) comprises a plurality of
    - band pass filters (a1, a2, ..., an) wired in parallel to each other for passing only signals within bands in the vicinity of said respective modulation frequencies (F1, F2, ..., Fn) from the output signal (O) of said detector (D),

- synchronous detector-rectifiers (b1, b2, ..., bn) arranged downstream of said respective band pass filters (a1, a2, ..., an) for detecting and rectifying output signals from said band pass filters (a1, a2, ..., an) synchronously with the practical fluid flow modulating action by the fluid flow modulation means (V1, V2, ..., Vn) corresponding to the frequencies of the passband, and

- leveller elements (c1, c2, ..., cn) disposed downstream of said respective synchronous detector-rectifiers (b1, b2, ..., bn) for levelling an output signal from said respective synchronous detector-rectifiers (b1, b2, ..., bn).

4. An apparatus according to one of the claims 2 or 3, wherein said fluid flow modulation means (V1, V2, ..., Vn) are rotary valves each having a housing (H), a rotor (R), an inlet (3) for sample fluids (S1, S2, ..., Sn), an exhaust port (4), an inlet (5) for reference fluids (R1, R2, ..., Rn) and an outlet (6) connected with said analytical portion (A).

5. An apparatus according to one of the claims 2 or 3, wherein said fluid flow modulation means (V1, V2, ..., Vn) are three-way changing-over electromagnetic valves.

6. An apparatus according to claims 2 or 3, wherein said fluid flow modulation means (V1, V2, ..., Vn) are four-way changing-over electromagnetic valves.

7. An apparatus according to one of the claims 2 to 6, wherein the housing (H) of at least one fluid flow modulation means (V1, V2, ..., Vn) is rotatable around the axis of rotation (Y) of the respective rotors (R).

8. An apparatus according to one of the claims 2 to 7, wherein said analytical portion (A) comprises only one cell (1) supplied with said flow modulated sample fluids (S1, S2, ..., Sn).

9. An apparatus according to one of the claims 2 to 7, wherein said analytical portion (A) comprises at least two cells (1A, 1B) supplied with at least two sample fluids (S1, S2).

10. An apparatus according to one of the claims 2 to 9, wherein at least one passage for said respective sample fluids (S1, S2, ..., Sn) is provided with at least one convertor (C, C0, C1, C2).

11. An apparatus according to one of the claims 2 to 10, wherein said signal treatment means (B) comprises a subtractor (G).

12. An apparatus according to one of the claims 2 to 10, wherein said signal treatment means (B) comprises an adding means (I).

13. An apparatus according to one of the claims 2 to 7, 9 to 12, wherein a solid sensor (15D) is provided with solid filters (15a, 15b) for the respective cells (1A, 1B) and with one sensor element (15c).

14. An apparatus according to one of the claims 2 to 7, 9 to 12, wherein a condenser microphone type sensor (20D) is provided with light-receiving chambers (20a, 20b) corresponding to said cells (1A, 1B) and wherein solid filters (21a, 21b) are disposed between said cells (1A, 1B) and said light-receiving chambers (20a, 20b).

15. An apparatus according to one of the claims 2 to 7, 9 to 12, wherein a condenser microphone type sensor (25D) is provided with light-receiving chambers (25a, 25b) corresponding to said cells (1A, 1B), a filter (26) is disposed between one of said cells (1A, 1B) and one of said light receiving chambers (25a, 25b).

16. An apparatus according to one of the claims 13 to 15, wherein said cells (1A, 1B) are of different lenghts.

17. An apparatus according to one of the claims 2 to 7, 9 to 12, wherein said cells (1A, 1B) are of different lengths and are disposed in series to each other between a light source (43) and a sensor (45D).

**Patentansprüche**

1. Verfahren zum Analysieren von Fluiden, mit den folgenden Schritten:
   - eine Mehrzahl von Fluidproben (S1, S2, ..., Sn) wird jeweils einer Fluidströmungsmodulation mit Bezugsfluiden (R1, R2, ..., Rn) dadurch ausgesetzt, daß die Fluidproben und die jeweiligen Bezugsfluide abwechselnd durch eine Strömungsmodulationseinrichtung geleitet werden;
   - ein Analyseabschnitt (A) mit nur einem Probendetektor (D) wird gleichzeitig und kontinuierlich mit den jeweiligen Fluidproben (S1, S2, ..., Sn) versorgt, die der Strömungsmodulation unterzogen wurden; und

- das Ausgangssignal (O) des Detektors (D) wird ausgewertet, um den Analysewert der jeweiligen Fluidprobe (S1, S2, ..., Sn) zu erhalten;
  **dadurch gekennzeichnet**, daß
- jede Fluidprobe (S1, S2, ..., Sn) mit einer zugeordneten Frequenz (z. B. F1) moduliert wird, die sich von den Frequenzen (z. B. F2, ..., Fn) unterscheidet, mit denen die anderen Fluidproben moduliert werden; und
- das Ausgangssignal (O) des Detektors (D) in Signalbestandteile (01, 02, ..., 0n) mit den verschiedenen Modulationsfrequenzen (F1, F2, ..., Fn) aufgeteilt wird und die Signalbestandteile zur Gewinnung der Analysewerte mit Pegelausgleich gleichgerichtet werden.

2. Vorrichtung zum Analysieren von Fluiden, mit:
- Fluidströmungsmodulationseinrichtungen (V1, V2, ..., Vn) zum
- Unterwerfen einer Mehrzahl von Fluidproben (S1, S2, ..., Sn) einer jeweiligen Fluidströmungsmodulation mit Bezugsfluiden (R1, R2,..., Rn) dadurch, daß diese Fluidproben und die jeweiligen Bezugsfluide abwechselnd durch eine Fluidströmungsmodulationseinrichtung geleitet werden;
- einem mit nur einem Probendetektor (D) versehenen Analyseabschnitt (A), dem die jeweiligen, der Fluidströmungsmodulation unterzogenen Fluidproben (S1, S2, ..., Sn) gleichzeitig und kontinuierlich zugeführt werden; und
- einer Signalbehandlungseinrichtung (B) zum Auswerten des Ausgangssignals (O) des Detektors (D) zum Erhalten des Analysewertes der jeweiligen Fluidproben (S1, S2, ..., Sn);
  **dadurch gekennzeichnet**, daß
- die Fluidströmungsmodulationseinrichtung (V1, V2 ..., Vn) jede Fluidprobe (S1, S2, ..., Sn) mit einer jeweiligen Frequenz (z.B. F1) moduliert, die sich von den Frequenzen (z.B. F2, ..., Fn) unterscheidet, mit denen die anderen Fluidproben moduliert werden; und
- die Signalbehandlungseinrichtung (B) das Ausgangssignal (O) des Detektors (D) in Signalbestandteile (O1, O2, ..., On) mit den verschiedenen Modulationsfrequenzen (F1, F2, ..., Fn) unterteilt und die Signalbestandteile gleichrichtet und im Wert ausgleicht, um dadurch die Analysewerte zu erhalten.

3. Vorrichtung nach Anspruch 2, bei der die Behandlungseinrichtung (B) von den folgenden Funktionsgruppen jeweils mehrere aufweist:
- Bandpaßfilter (a1, a2, ..., an), die parallel geschaltet sind, um nur Signale innerhalb Bändern in der Nähe der jeweiligen Modulationsfrequenzen (F1, F2, ..., Fn) des Ausgangssignals (O) des Detektors (D) durchzulassen;
- Synchrondemodulatoren (b1, b2, ..., bn), die stromabwärts bezüglich der jeweiligen Sandpaßfilter (a1, a2, ..., an) angeordnet sind, um die Ausgangssignale der Bandpaßfilter (a1, a2, ..., an) synchron mit der tatsächlichen Fluidströmungsmodulationswirkung durch die Fluidströmungsmodulationseinrichtungen (V1, V2, ..., Vn) entsprechend den Frequenzen des Durchlaßbandes zu erfassen und gleichzurichten; und
- Werteausgleichselemente (c1, c2, ..., cn), die stromabwärts bezüglich der jeweiligen Synchrondemodulatoren (b1, b2, ..., bn) angeordnet sind, um das Ausgangssignal eines jeweiligen Synchrondemodulators (b1, b2, ..., bn) im Wert auszugleichen.

4. Vorrichtung nach einem der Ansprüche 2 oder 3, bei der die Fluidströmungsmodulationseinrichtungen (V1, V2, ..., Vn) Drehschieber mit jeweils einem Gehäuse (H), einem Rotor (R), einem Einlaß (3) für Fluidproben (S1, S2, ..., Sn) einem Auslaß (4), einem Einlaß (5) für Bezugsfluide (R1, R2, ..., Rn) und einem mit dem Analyseabschnitt (A) verbundenen Auslaß (6) sind.

5. Vorrichtung nach einem der Ansprüche 2 oder 3, bei der die Fluidströmungsmodulationseinrichtungen (V1, V2, ..., Vn) elektromagnetische Dreiwege-Umschaltventile sind.

6. Vorrichtung nach einem der Ansprüche 2 oder 3, bei der die Fluidströmungsmodulationseinrichtungen (V1, V2, ..., Vn) elektromagnetische Vierwege-Umschaltventile sind.

7. Vorrichtung nach einem der Ansprüche 2 oder 6, bei der das Gehäuse (H) mindestens einer Fluidströmungsmodulationseinrichtung (V1, V2, ..., Vn) um die Drehachse (Y) des jeweiligen Rotors (R) drehbar ist.

8. Vorrichtung nach einem der Ansprüche 2 bis 7, bei der der Analyseabschnitt (A) nur eine Zelle (1) aufweist, die mit den strömungsmodulierten Fluidproben (S1, S2, ..., Sn) versorgt wird.

9. Vorrichtung nach einem der Ansprüche 2 bis 7, bei der der Analyseabschnitt (A) mindestens zwei Zellen (1A, 1B) aufweist, die mit mindestens zwei Fluidproben (S1, S2) versorgt werden.

10. Vorrichtung nach einem der Ansprüche 2 bis 9, bei der mindestens ein Kanal für die jeweiligen Fluidprogen (S1, S2, ..., Sn) mit mindestens einem Konverter (C, CO, C1, C2) ausgestattet ist.

11. Vorrichtung nach einem der Ansprüche 2 bis 10, bei der die Signalbehandlungseinrichtung (B) einen Subtrahierer (G) aufweist.

12. Vorrichtung nach einem der Ansprüche 2 bis 10, bei der die Signalbehandlungseinrichtung (B) eine Addiereinrichtung (I) aufweist.

13. Vorrichtung nach einem der Ansprüche 2 bis 7, 9 bis 12, bei der ein Festkörpersensor (15D) mit festen Filtern (15a, 15b) für die jeweiligen Zellen (1A, 1B) und mit einem Sensorelement (15c) versehen ist.

14. Vorrichtung nach einem der Ansprüche 2 bis 7, 9 bis 12, bei der ein Sensor (20D) vom Kondensatormikrophontyp mit den Zellen (1A, 1B) entsprechenden Lichtempfangskammern (20a, 20b) vorhanden ist und bei der feste Filter (21a, 21b) zwischen den Zellen (1A, 1B) und den Lichtempfangskammern (20a, 20b) angeordnet sind.

15. Vorrichtung nach einem der Ansprüche 2 bis 7, 9 bis 12, bei der ein Sensor (25D) vom Kondensatormikrophontyp mit den Zellen (1A, 1B) entsprechenden Lichtempfangskammern (25a, 25b) vorhanden ist und ein Filter (26) zwischen einer der Zellen (1A, 1B) und einer der Lichtempfangskammern (25a, 25b) angeordnet ist.

16. Vorrichtung nach einem der Ansprüche 13 bis 15, bei der die Zellen (1A, 1B) unterschiedliche Längen aufweisen.

17. Vorrichtung nach einem der Ansprüche 2 bis 7, 9 bis 12, bei der die Zellen (1A, 1B) unterschiedliche Längen aufweisen und hintereinander zwischen einer Lichtquelle (43) und einem Sensor (45D) angeordnet sind.

**Revendications**

1. Procédé d'analyse de fluides, comportant les étapes consistant à:
   - soumettre une pluralité de fluides échantillons (S1,S2,..., Sn) à une modulation d'écoulement de fluide avec des fluides de référence (R1,R2,...Rn), respectivement, en faisant passer lesdits fluides échantillons et lesdits fluides de référence respectifs alternativement à travers un moyen de modulation d'écoulement de fluide;
   - alimenter simultanément et continûment une partie d'analyse (A) équipée d'un unique détecteur d'échantillon (D) avec lesdits fluides échantillons respectifs (S1,S2,...Sn) qui ont été soumis à ladite modulation d'écoulement de fluide;et
   - évaluer le signal de sortie (O) dudit détecteur (D) pour obtenir des valeurs d'analyse desdits fluides échantillons respectifs (S1,S2,...Sn);
   caractérisé en ce que
   - chaque fluide échantillon (S1,S2,...Sn) est modulé par une fréquence respective (par exemple F1) différente des fréquences (par exemple F2,...,Fn) avec lesquelles les autres fluides échantillons sont modulés; et
   - le signal de sortie (O) dudit détecteur (D) est divisé en composantes de signal (O1,O2,...,On) ayant lesdites fréquences de modulation différentes (F1,F2,...,Fn), et un traitement de redressement et d'égalisation desdites composantes de signal est effectué, pour obtenir ainsi lesdites valeurs d'analyse.

2. Dispositif d'analyse de fluides, comportant :
   - des moyens de modulation d'écoulement de fluide (V1,V2,..., Vn) pour soumettre une pluralité de fluides échantillons (S1, S2,...,Sn) à une modulation d'écoulement de fluide avec des fluides de référence (R1,R2,...,Rn), respectivement, en faisant passer lesdits fluides échantillons et lesdits fluides de référence respectifs alternativement à travers lesdits moyens de modulation d'écoulement de fluide;
   - une partie d'analyse (A) équipée d'un unique détecteur d'échantillon (D) auquel lesdits fluides échantillons respectifs (S1,S2,...,Sn) soumis à ladite modulation d'écoulement de fluide sont simultanément et continûment délivrés; et

- des moyens de traitement de signal (B) pour évaluer le signal de sortie (O) dudit détecteur (D) pour obtenir des valeurs d'analyse desdits fluides échantillons respectifs (S1,S2,...,Sn);

  caractérisé en ce que

- lesdits moyens de modulation d'écoulement de fluide (V1, V2,...,Vn) modulent chaque fluide échantillon (S1,S2,...,Sn) par une fréquence respective (par exemple F1) différente des fréquences (par exemple F2,...,Fn) avec lesquelles les autres fluides échantillons sont modulés; et

- lesdits moyens de traitement de signal (D) divisent ledit signal de sortie (O) dudit détecteur (D) en composantes de signal (O1,O2,...,On) ayant lesdites fréquences de modulation différentes (F1,F2,...,Fn), et redressent et égalisent lesdites composantes de signal, pour obtenir ainsi lesdites valeurs d'analyse.

3. Dispositif selon la revendication 2, dans lequel lesdits moyens de traitement (B) comportent une pluralité de

- filtres passe-bande (a1,a2,...,an) connectés en parallèle entre eux pour transmettre uniquement des signaux à l'intérieur de bandes proches desdites fréquences de modulation respectives (F1,F2,...,Fn) du signal de sortie (O) dudit détecteur (D),

- de redresseurs-détecteurs synchrones (b1,b2,...bn) disposés en aval desdits filtres passe-bande (a1,a2,...,an) pour détecter et redresser des signaux de sortie desdits filtres passe-bande (a1,a2,...,an) de façon synchrone à l'action de modulation d'écoulement de fluide pratique par les moyens de modulation d'écoulement de fluide (V1,V2,...,Vn) correspondant aux fréquences de la bande passante, et

- des éléments d'égalisation (c1,c2,...,cn) disposés en aval desdits redresseurs-détecteurs synchrones respectifs (b1,b2,...,bn) pour égaliser un signal de sortie desdits redresseurs-détecteurs synchrones respectifs (b1,b2,...,bn).

4. Dispositif selon l'une des revendications 2 ou 3, dans lequel lesdits moyens de modulation d'écoulement de fluide (V1,V2,...,Vn) sont des vannes rotatives possédant chacune un boîtier (H), un rotor (R), un orifice d'admission (3) pour des fluides échantillons (S1,S2,...,Sn), un orifice d'échappement (4), un orifice d'admission (5) pour des fluides de référence (R1,R2,...,Rn) et un orifice de sortie (6) relié à à ladite partie d'analyse (A).

5. Dispositif selon l'une des revendications 2 ou 3, dans lesdits moyens de modulation d'écoulement de fluide (V1,V2,..., Vn) sont des électro-vannes de commutation à trois voies.

6. Dispositif selon les revendications 2 ou 3, dans lequel lesdits moyens de modulation d'écoulement de fluide (V1,V2,...,Vn) sont des électro-vannes de commutation à quatre voies.

7. Dispositif selon l'une des revendications 2 à 6, dans lequel le boîtier (H) d'au moins un des moyens de modulation d'écoulement de fluide (V1,V2,...,Vn) est rotatif autour de l'axe de rotation (Y) des rotors respectifs (R).

8. Dispositif selon l'une des revendications 2 à 7, dans lequel ladite partie d'analyse (A) comporte une seule cellule (1) alimentée avec lesdits fluides échantillons à écoulement modulé (S1,S2,...,Sn).

9. Dispositif selon l'une des revendications 2 à 7, dans lequel ladite partie d'analyse (A) comporte au moins deux cellules (1A,1B) alimentées par au moins deux fluides échantillons (S1,S2).

10. Dispositif selon l'une des revendications 2 à 9, dans lequel au moins un passage pour lesdits fluides échantillons respectifs (S1,S2,...,Sn) est équipé d'au moins un convertisseur (C,C0,C1,C2).

11. Dispositif selon l'une des revendications 2 à 10, dans lequel lesdits moyens de traitement de signal (B) comportent un soustracteur (G).

12. Dispositif selon l'une des revendications 2 à 10, dans lequel lesdits moyens de traitement de signal (B) comportent un organe d'addition (I).

13. Dispositif selon l'une des revendications 2 à 7,9 à 12, dans lequel un capteur à l'état solide (15D) est équipé de de filtres à l'état solide (15a,15b) pour les cellules respectives (1A,1B) et d'un élément de capteur (15c).

14. Dispositif selon l'une des revendication 2 à 7, 9 à 12, dans lequel un capteur de type microphone électrostatique (20D) est pourvu de chambres de réception de lumière (20a, 20b) correspondant auxdites cellules (1A, 1B) et dans lequel des filtres solides (21a, 21b) sont disposés entre lesdites cellules (1A, 1B) et lesdites chambres de réception de lumière (20a, 20b).

15. Dispositif selon l'une des revendications 2 à 7, 9 à 12, dans lequel un capteur de type microphone électrostatique (25D) est pourvu de chambres de réception de lumière (25a, 25b) correspondant auxdites cellules (1A, 1B), un filtre (26) est diposé entre l'une desdites cellules (1A, 1B) et l'une desdites chambres de réception de lumière (25a, 25b).

16. Dispositif selon l'une des revendications 13 à 15, dans lequel lesdites cellules (1A, 1B) ont des longueurs différentes.

17. Dispositif selon l'une des revendications 2 à 7, 9 à 12, dans lequel lesdites cellules (1A, 1B) ont des longueurs différentes et sont diposées en série l'une par rapport à l'autre entre une source de lumière (43) et un capteur (45D).

Fig. 1

EP 0 319 887 B1

# Fig. 2

# Fig. 3

EP 0 319 887 B1

Fig. 4

# Fig. 5

(A)

(sample fluid)

V1 (V2)

(exhaust) ← → (to analytical portion A)

motor

(reference fluid)

(B)

(sample fluid)

V1 (V2)

(exhaust) ← → (to analytical portion A)

(signal)

(reference fluid)

EP 0 319 887 B1

# F i g. 6

(A)

(INVERSION)    (INVERSION)

Leveled value $>>0$

EP 0 319 887 B1

# Fig. 6

(B)

(INVERSION)

Leveled value $\neq$ 0

F i g. 7

(A)

(INVERSION)       (INVERSION)

Leveled value = 0

Fig. 7

(B)

Leveled  value = 0

(INVERSION)

# F i g. 7

## (C)

EP 0 319 887 B1

Fig. 7

(D)

# Fig. 8

## (A)

# Fig. 8

## (B)

Leveled value ≠ 0

# Fig. 9

## (A)

# Fig. 9

## (B)

Fig. 10

(A)

(INVERSION)

( " )

0

90°

leveled value = 0

Fig. 10

(B)

( ″ )

( ″ )

( ″ )

(INVERSION)

90.°

leveled value = 0

EP 0 319 887 B1

# F i g . 11

# F i g . 12

# F i g. 13

EP 0 319 887 B1

Fig. 14

Fig. 15

EP 0 319 887 B1

Fig. 16

Fig. 17

# Fig. 18

EP 0 319 887 B1

Fig. 19

Fig. 20

# Fig. 21

Fig. 22

Fig. 23

# Fig. 24

EP 0 319 887 B1

EP 0 319 887 B1

Fig. 25

Fig. 26

43  1A  1B  O  2  B

V1  V2

(S1) (S2)

(R1)  45(D)  (R2)

aL
aH

R  S

Fig. 27

output

0  concentration

EP 0 319 887 B1